(19) **Europäisches Patentamt / European Patent Office / Office européen des brevets**

(11) **EP 4 502 080 A2**

(12) **EUROPEAN PATENT APPLICATION**

(43) Date of publication:
05.02.2025 Bulletin 2025/06

(51) International Patent Classification (IPC):
*C08L 101/00* (2006.01)

(21) Application number: 24211469.2

(22) Date of filing: 25.10.2021

(52) Cooperative Patent Classification (CPC):
(C-Sets available)
C08K 5/20; C08L 51/04; C08L 51/085   (Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 23.10.2020  JP 2020178003
15.01.2021  JP 2021005171
15.01.2021  JP 2021005172

(62) Document number(s) of the earlier application(s) in
accordance with Art. 76 EPC:
21882940.6 / 4 234 598

(71) Applicant: Mitsubishi Chemical Corporation
Tokyo 100-8251 (JP)

(72) Inventors:
• YANAI, Toshimi
Tokyo, 100-8251 (JP)
• HAMADA, Yujiro
Tokyo, 100-8251 (JP)

(74) Representative: Ter Meer Steinmeister & Partner
Patentanwälte mbB
Nymphenburger Straße 4
80335 München (DE)

Remarks:
This application was filed on 07-11-2024 as a
divisional application to the application mentioned
under INID code 62.

(54) **RESIN COMPOSITION AND MOLDED ARTICLE THEREOF**

(57) The present invention relates to a resin composition comprising a graft copolymer (A), a thermoplastic resin (B) (excluding the graft copolymer (A) and a polylactic acid polymer (D)), and a fatty acid compound (C).

FIG. 1

TD DIRECTION

MD DIRECTION

EP 4 502 080 A2

(52) Cooperative Patent Classification (CPC): (Cont.)

C-Sets
**C08F 285/00, C08F 220/14;**
**C08L 33/12, C08L 51/085, C08K 5/20;**
**C08L 51/04, C08L 33/12, C08L 67/04, C08K 5/20;**
**C08L 51/085, C08L 33/12, C08L 67/04, C08K 5/20**

**EP 4 502 080 A2**

**Description**

[Technical Field]

The present invention relates to a resin composition and a molded article thereof.
Priority is claimed on Japanese Patent Application No. 2020-178003, filed October 23, 2020, Japanese Patent Application No. 2021-005171, filed January 15, 2021, and Japanese Patent Application No. 2021-005172, filed January 15, 2021, the contents of which are incorporated herein by reference.

[Background Art]

A (meth)acrylic resin has been widely used in various fields such as optical materials, lighting materials, materials for housing equipment, building materials, and vehicle parts, because of their excellent appearance, weather resistance, and dimensional stability.
With regard to the (meth)acrylic resin, in recent years, for the purpose of reducing environmental load, there has been a demand for a resin composition in which the amount of the (meth)acrylic resin is reduced by blending a biomass resin from a plant material, such as a polylactic acid resin.
On the other hand, in the above-described applications, there has been a demand for a (meth)acrylic resin having excellent transparency because of its excellent product appearance.
In addition, in the above-described applications, since the product may be damaged due to contact with people or objects such as flying objects, there has been a demand for a (meth)acrylic resin having excellent impact resistance. Furthermore, in some of the above-described applications, from the viewpoint of excellent processability of the product, there has been a demand for a (meth)acrylic resin in which mechanical properties such as flexural modulus and flexural stress are moderately controlled while maintaining high impact resistance.
Furthermore, in recent years, a molded article of the (meth)acrylic resin is required to have higher performance as parts to be thinner and more complicated, and as one of the higher performance, there has been a demand for a (meth) acrylic resin having excellent heat resistance.
As a method for improving these properties, Patent Documents 1 to 3 propose resin compositions containing an acrylic polymer, a polylactic acid resin, and a graft copolymer as an impact resistance modifier.
A thermoplastic resin is easy to mold and process, and has been widely used in various applications such as materials for housing equipment, for example, bathroom vanities, bathtubs, flush toilets, and the like; building materials for outdoor application, for example, signboards, window frames, exterior wall materials, and the like; and vehicle parts, for example, interior and exterior materials for vehicles, and the like.
When the thermoplastic resin is used for the above-described applications, since the product may be damaged due to contact with people or objects such as flying objects, there has been a demand for a thermoplastic resin having excellent impact resistance.
In addition, the product may be damaged due to contact with people or objects, there has been a demand for a thermoplastic resin having excellent scratch resistance.
Furthermore, there has been a demand for a thermoplastic resin having excellent product processability while maintaining high impact resistance and scratch resistance.
As a method for improving the impact resistance of the thermoplastic resin, for example, Patent Documents 4 and 5 disclose a methacrylic resin composition containing a polyorganosiloxane/acrylic acid ester composite rubber graft copolymer.
Patent Document 6 discloses a methacrylic resin composition containing a graft copolymer which includes a copolymerization rubber-like polymer containing an acrylic acid alkyl ester and a conjugated diene.

[Citation List]

[Patent Documents]

[Patent Document 1]
Japanese Unexamined Patent Application, First Publication No. 2017-197667
[Patent Document 2]
Pamphlet of PCT International Publication No. WO05/123831
[Patent Document 3]
Pamphlet of PCT International Publication No. WO05/085352

[Patent Document 4]
Japanese Unexamined Patent Application, First Publication No. H11-100484
[Patent Document 5]
Japanese Unexamined Patent Application, First Publication No. 2000-327880
[Patent Document 6]
Japanese Examined Patent Application, Second Publication No. H7-25973

[Summary of Invention]

[Technical Problem]

However, since the resin compositions proposed in Patent Documents 1 to 3 contain an excessive amount of the polylactic acid resin and an insufficient amount of the graft copolymer, the heat resistance, the impact resistance, and the mechanical properties such as the elastic modulus and the flexural stress are insufficient.

A first aspect of the present invention is to provide a resin composition having excellent mechanical properties and a molded article thereof.

A second aspect of the present invention aims to solve these problems. That is, the object of the second aspect of the present invention is to provide a resin composition that a molded article to be obtained has excellent transparency, impact resistance, heat resistance, and mechanical properties such as flexural modulus and flexural stress, and a molded article thereof.

In the resin compositions disclosed in Patent Documents 4 and 5, the scratch resistance of a molded article to be obtained is insufficient.

In the resin composition disclosed in Patent Document 6, the product processability and the scratch resistance of a molded article to be obtained are insufficient. In addition, the impact resistance is also insufficient.

A third aspect of the present invention aims to solve these problems. That is, the object of the third aspect of the present invention is to provide a resin composition that a molded article to be obtained has excellent scratch resistance, impact resistance, and product processability, and a molded article thereof.

[Solution to Problem]

The present invention has the following configurations.

The first aspect of the present invention has the following configuration.

[1] A resin composition comprising:

a graft copolymer (A);
a thermoplastic resin (B) (excluding the graft copolymer (A) and a polylactic acid polymer (D)); and
a fatty acid compound (C).

[2] The resin composition according to [1],

wherein the graft copolymer (A) is obtained by graft-polymerizing a monomer to a rubber-like polymer,
the rubber-like polymer includes at least one selected from the group consisting of a composite rubber containing polyorganosiloxane rubber and acrylic rubber, a diene rubber, and an acrylic rubber, and
the monomer includes a vinyl monomer.

[3] The resin composition according to [1] or [2],
wherein the graft copolymer (A) contains a silicone component.
[4] The resin composition according to any one of [1] to [3],
wherein the thermoplastic resin (B) contains a (meth)acrylic polymer (B1).
[5] The resin composition according to any one of [1] to [4],
wherein the fatty acid compound (C) includes at least one selected from the group consisting of a saturated fatty acid amide compound, an unsaturated fatty acid amide compound, a bis-fatty acid amide compound, and a methylol fatty acid amide compound.
[6] The resin composition according to [5],
wherein the fatty acid compound (C) includes a fatty acid amide compound.
[7] The resin composition according to [6],
wherein the fatty acid amide compound includes at least one selected from the group consisting of lauric acid amide,

EP 4 502 080 A2

palmitic acid amide, stearic acid amide, behenic acid amide, hydroxystearic acid amide, and methylol stearic acid amide.

[8] The resin composition according to any one of [1] to [7], further comprising:

the polylactic acid polymer (D).

[9] The resin composition according to any one of [1] to [8], wherein a content of the graft copolymer (A) is preferably 10 to 80 mass%, more preferably 20 to 70 mass%, and still more preferably 30 to 60 mass% with respect to a total mass of the resin composition.

[10] The resin composition according to any one of [1] to [9], wherein a content of the thermoplastic resin (B) is preferably 10 to 80 mass%, more preferably 20 to 75 mass%, and still more preferably 30 to 70 mass% with respect to a total mass of the resin composition.

[11] The resin composition according to any one of [1] to [10], wherein a content of the fatty acid compound (C) is preferably 1 to 20 mass%, more preferably 1.5 to 10 mass%, and still more preferably 2 to 8 mass% with respect to a total mass of the resin composition.

[12] The resin composition according to any one of [1] to [11], further comprising:

the polylactic acid polymer (D), wherein a content of the polylactic acid polymer (D) is preferably 1 to 50 mass%, more preferably 2 to 40 mass%, and still more preferably 3 to 35 mass% with respect to a total mass of the resin composition.

[13] The resin composition according to any one of [1] to [12], wherein a gel content of the graft copolymer (A) is preferably 40 mass% or more and 99 mass% or less, more preferably 50 mass% or more and 95 mass% or less, and still more preferably 55 mass% or more and 90 mass% or less.

[14] A molded article comprising:
the resin composition according to any one of [1] to [13].

The second aspect of the present invention has the following configuration.

[1] A resin composition comprising:

a polylactic acid polymer (D);
a (meth)acrylic polymer (B 1) containing a methyl methacrylate monomer unit; and
a graft copolymer (A) which is obtained by graft-polymerizing a vinyl monomer to a rubber-like polymer and is contained in an amount of more than 45 parts by mass and 110 parts by mass or less with respect to 100 parts by mass of a total of the polylactic acid polymer (D) and the (meth)acrylic polymer (B 1), wherein the graft copolymer (A) is obtained by graft-polymerizing a vinyl monomer (a2) to a rubber-like polymer (A1) which is at least one selected from a polyorganosiloxane/acrylic rubber, a diene rubber, and an acrylic rubber.

[2] The resin composition according to [1], wherein the graft copolymer (A) is contained in an amount of 65 parts by mass or more and 95 parts by mass or less with respect to 100 parts by mass of the total of the polylactic acid polymer (D) and the (meth)acrylic polymer (B 1).

[3] The resin composition according to [1] or [2], wherein the polyorganosiloxane/acrylic rubber is a composite rubber containing polyorganosiloxane and alkyl acrylate rubber.

[4] The resin composition according to any one of [1] to [3], wherein a formulation ratio of the polylactic acid polymer (D) and the (meth)acrylic polymer (B 1) is 1/99 to 99/1 (mass ratio).

[5] The resin composition according to any one of [1] to [4], wherein a formulation ratio of the polylactic acid polymer (D) and the (meth)acrylic polymer (B 1) is 5/95 to 50/50 (mass ratio).

[6] The resin composition according to any one of [1] to [5], wherein, with respect to a total mass of the resin composition, the polylactic acid polymer (D) and the (meth)acrylic polymer (B 1) are contained in a total amount of 30 mass% or more and 70 mass% or less, and the graft copolymer (A) is contained in an amount of 30 mass% or more and 70 mass% or less.

[7] The resin composition according to any one of [1] to [6], wherein the methyl methacrylate monomer unit is contained in the (meth)acrylic polymer (B 1) in an amount of 50 mass% or more.

[8] The resin composition according to any one of [1] to [7], further comprising:

a fatty acid compound (C).

[9] The resin composition according to [8],

wherein the fatty acid compound (C) contains a compound represented by General Formula (i) as a main component,

$$R\text{-}CONH_2 \qquad (i)$$

(in the formula, R is a hydrocarbon group having 10 to 25 carbon atoms, which may have a substituent).

[10] The resin composition according to [8],
wherein the fatty acid compound (C) contains, as a main component, at least one selected from stearic acid amide and palmitic acid amide.
[11] The resin composition according to any one of [8] to [10],
wherein the fatty acid compound (C) is contained in an amount of 0.01 parts by mass or more and 10 parts by mass or less with respect to 100 parts by mass of the total of the polylactic acid polymer (D) and the (meth)acrylic polymer (B 1).
[12] The resin composition according to any one of [1] to [11],
wherein a refractive index Rc of the graft copolymer (A) and a total refractive index Rab of the polylactic acid polymer (D) and the (meth)acrylic polymer (B1) satisfy Expression (1A),

$$-0.03 \leq Rc \text{ - } Rab \leq +0.03 \cdots \text{Expression (1A)}.$$

[13] The resin composition according to any one of [1] to [8],
wherein a content of a crosslinkable monomer is 0.3 to 10 mass% in a total 100 mass% of monomers constituting the rubber-like polymer (A1).
[14] A molded article obtained by molding the resin composition according to any one of [1] to [13].

The third aspect of the present invention has the following configuration.

[1] A resin composition comprising:

a graft copolymer (A) containing a silicone component;
a thermoplastic resin (B); and
a fatty acid compound (C).

[2] The resin composition according to [1],
wherein the graft copolymer (A) is a graft copolymer obtained by graft-polymerizing a monomer containing a (meth) acrylic acid compound to a composite rubber (c) containing polyorganosiloxane (a) and alkyl acrylate rubber (b).
[3] The resin composition according to [1] or [2],
wherein a melting point of the fatty acid compound (C) is 90°C or higher.
[4] The resin composition according to any one of [1] to [3],
wherein a 10% weight loss temperature of the fatty acid compound (C) is 350°C or lower.
[5] The resin composition according to any one of [1] to [4],
wherein the fatty acid compound (C) contains fatty acid amide as a main component.
[6] The resin composition according to [5],

wherein the fatty acid amide is represented by General Formula (i),

$$R\text{-}CONH_2 \qquad (i)$$

(in the formula, R is a hydrocarbon group having 10 to 25 carbon atoms, which may have a substituent).

[7] The resin composition according to any one of [1] to [6],
wherein the thermoplastic resin (B) contains a (meth)acrylic acid ester polymer having a repeating unit derived from a (meth)acrylic acid ester monomer.
[8] The resin composition according to [7],
wherein the (meth)acrylic acid ester polymer has the repeating unit derived from a (meth)acrylic acid ester monomer in an amount of 80 mass% or more with respect to 100 mass% of a total mass of the (meth)acrylic acid ester polymer.

[9] The resin composition according to any one of [1] to [8],

wherein the graft copolymer (A) is a graft copolymer obtained by graft-polymerizing 30 to 70 parts by mass of a monomer containing a (meth)acrylic acid compound to 30 to 70 parts by mass of a composite rubber (c) which contains 1 to 20 mass% of polyorganosiloxane (a) and 80 to 99 mass% of alkyl acrylate rubber (b).

[10] The resin composition according to any one of [1] to [9],

wherein a gel content of the resin composition is 1 mass% or more.

[11] The resin composition according to [10],

wherein the gel content of the resin composition is 35 mass% or less.

[12] The resin composition according to any one of [1] to [11],

wherein the resin composition contains the graft copolymer (A) in a content proportion of 1 mass% or more and 50 mass% or less and contains the thermoplastic resin (B) in a content proportion of 50 mass% or more and 99 mass% or less with respect to 100 mass% of a total mass of the resin composition.

[13] The resin composition according to any one of [1] to [12],

wherein the resin composition contains the fatty acid compound (C) in a content proportion of 0.01 mass% or more and 10 mass% or less with respect to 100 mass% of a total mass of the resin composition.

[14] A molded article comprising:

the resin composition according to any one of [1] to [13].

[Advantageous Effects of Invention]

According to the present invention, it is possible to stably provide a resin composition that a molded article to be obtained has excellent transparency, impact resistance, heat resistance, and mechanical properties such as flexural modulus and flexural stress, and a molded article thereof.

According to the present invention, it is possible to provide a resin composition that a molded article to be obtained has excellent scratch resistance, impact resistance, and product processability, and a molded article thereof.

Such resin compositions are suitable for applications such as exterior materials for vehicles and building materials installed outdoors, for example, signboards, window frames, and exterior wall materials.

[Brief Description of Drawings]

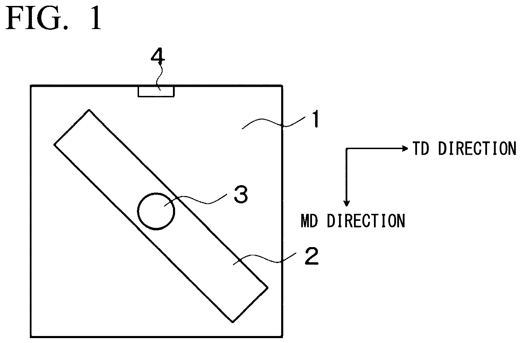

FIG. 1 is a schematic diagram showing an outline of a scratch resistance test used for evaluation of a molded article according to the third embodiment of the present invention.

[Description of Embodiments]

In the present invention, "(meth)acrylic acid" means at least one selected from "acrylic acid" and "methacrylic acid". In addition, (meth)acrylate represents methacrylate or acrylate.

In the present invention, "monomer" means an unpolymerized compound, and "repeating unit" and "structural unit" mean a constituent unit constituting a polymer derived from a monomer, the polymer being formed by polymerizing the monomer. In addition, the constituent unit constituting a polymer is referred to as "... monomer unit". The "repeating unit" or "structural unit" may be a unit directly formed by a polymerization reaction, or a unit in which a part of the unit is converted to another structure by treating the polymer.

In the present invention, "mass%" indicates a content proportion of a predetermined component contained in 100 mass% of the total amount.

In the present invention, unless otherwise specified, a numerical range represented by "to" used herein means a range that includes numerical values described before and after "to" as a lower limit value and an upper limit value, and "A to B" means A or more and B or less.

In the present invention, "molded article to be obtained" means a molded article obtained by molding the resin composition according to the embodiment of the present invention.

<Resin composition>

The resin composition according to the first embodiment of the present invention contains a graft copolymer (A), a thermoplastic resin (B) (excluding the graft copolymer (A) and a polylactic acid polymer (D)), and a fatty acid compound (C).

<Graft copolymer (A)>

The resin composition according to the first embodiment of the present invention contains a graft copolymer (A).

As the graft copolymer (A), graft copolymers same as the graft copolymer (A) in the second and third embodiments of the present invention, which will be described later, are exemplary examples.

<Thermoplastic resin (B)>

The resin composition according to the first embodiment of the present invention contains a thermoplastic resin (B). The above-described thermoplastic resin (B) does not include the above-described graft copolymer (A) and a polylactic acid polymer (D) described below.

As the thermoplastic resin (B), thermoplastic resins same as the thermoplastic resin (B) such as a (meth)acrylic polymer (B 1) in the second and third embodiments of the present invention, which will be described later, are exemplary examples.

<Fatty acid compound (C)>

The resin composition according to the first embodiment of the present invention contains a fatty acid compound (C).

As the fatty acid compound (C), fatty acid compounds same as the fatty acid compound (C) in the second and third embodiments of the present invention, which will be described later, are exemplary examples.

<Polylactic acid polymer (D)>

The resin composition according to the first embodiment of the present invention may or may not further contain a polylactic acid polymer (D).

As the polylactic acid polymer (D), polylactic acid polymers same as the polylactic acid polymer (D) in the second embodiment of the present invention, which will be described later, are exemplary examples.

<Other additives>

The resin composition according to the first embodiment of the present invention may or may not contain an additive other than the graft copolymer (A), the thermoplastic resin (B), and the fatty acid compound (C).

As other additives, additives same as additives in the second and third embodiments of the present invention, which will be described later, are exemplary examples.

When the resin composition according to the first embodiment of the present invention is molded into a molded article, a Charpy impact strength measured by a method described later is preferably 5 to 50 kJ/m$^2$, more preferably 10 to 45 kJ/m$^2$, and still more preferably 20 to 40 kJ/m$^2$.

When the resin composition according to the first embodiment of the present invention is molded into a molded article, a deflection temperature under load measured by a method described later is preferably 50°C to 100°C, more preferably 60°C to 95°C, and still more preferably 70°C to 90°C.

When the resin composition according to the first embodiment of the present invention is molded into a molded article, a flexural stress measured by a method described later is preferably 10 to 70 MPa, more preferably 15 to 60 MPa, and still more preferably 20 to 50 MPa.

When the resin composition according to the first embodiment of the present invention is molded into a molded article, a flexural modulus measured by a method described later is preferably 0.5 to 2.0 MPa, more preferably 1.0 to 1.85 MPa, and still more preferably 1.5 to 1.80 MPa.

When the resin composition according to the first embodiment of the present invention is molded into a molded article, a total light transmittance measured by a method described later is preferably 60% to 90%, more preferably 65% to 85%, and still more preferably 70% to 80%.

When the resin composition according to the first embodiment of the present invention is molded into a molded article, a haze value measured by a method described later is preferably 5% to 55%, more preferably 10% to 50%, and still more preferably 10% to 40%.

When the resin composition according to the first embodiment of the present invention is molded into a molded article, a tensile elongation measured by a method described later is preferably 20% to 50%, more preferably 25% to 45%, and still more preferably 30% to 40%.

When the resin composition according to the first embodiment of the present invention is molded into a molded article, a difference in glossiness measured by a method described later is preferably -3.0 to 50, more preferably -2.0 to 40, and still more preferably -1.5 to 35.

<Method for producing resin composition>

The resin composition according to the first embodiment of the present invention can be produced by the same method for producing a resin composition in the second and third embodiments of the present invention, which will be described later.

<Molded article>

The molded article according to the first embodiment of the present invention can be produced by the same method for producing a molded article in the second and third embodiments of the present invention, which will be described later.

The molded article according to the first embodiment of the present invention can be used for the same applications as the molded article in the second and third embodiments of the present invention, which will be described later.

Specifically, the method for producing the molded article according to the first embodiment of the present invention includes injection molding the resin composition according to the first embodiment of the present invention.

<Resin composition>

The resin composition according to the second embodiment of the present invention contains a graft copolymer (A) described later in an amount of more than 45 parts by mass and 110 parts by mass or less with respect to 100 parts by mass of the total of a polylactic acid polymer (D) described alter and a (meth)acrylic polymer (B1) described later.

When the lower limit of the content of the graft copolymer (A) with respect to 100 parts by mass of the total of the polylactic acid polymer (D) and the (meth)acrylic polymer (B 1) is more than 45 parts by mass, the molded article to be obtained has excellent transparency, mechanical properties such as flexural modulus and flexural stress (hereinafter, referred to as "flexural mechanical properties"), and impact resistance. The lower limit of the content thereof is more preferably 65 parts by mass or more. On the other hand, when the upper limit of the content of the graft copolymer (A) is 110 parts by mass or less, the molded article to be obtained can maintain favorable heat resistance. The upper limit of the content thereof is more preferably 95 parts by mass or less.

The upper and lower limits of the content of the graft copolymer (A) can be combined arbitrarily. For example, the content of the graft copolymer (A) is more than 45 parts by mass and 110 parts by mass, more preferably 65 parts by mass or more and 95 parts by mass or less with respect to 100 parts by mass of the total of the polylactic acid polymer (D) and the (meth)acrylic polymer (B1).

A formulation ratio of the polylactic acid polymer (D) and the (meth)acrylic polymer (B1) can be arbitrarily adjusted within the above-described range. For example, in general, in applications where there is a high demand for reducing environmental load, it is preferable that the amount of the polylactic acid polymer (D) is larger, and in applications where there is a high demand for improving heat resistance, it is preferable that the amount of the (meth)acrylic polymer (B1) is larger.

In the resin composition according to the second embodiment of the present invention, since the molded article to be obtained has excellent transparency, impact resistance, heat resistance, and flexural mechanical properties, the formulation ratio (mass ratio) of the polylactic acid polymer (D) and the (meth)acrylic polymer (B1) is preferably 1/99 to 99/1 and more preferably 5/95 to 50/50.

The resin composition according to the second embodiment of the present invention can further contain a fatty acid compound (C) described later.

Within a range that does not impair the effects of the present invention, the resin composition according to the second embodiment of the present invention can further contain other thermoplastic resins such as styrene resins, for example, polystyrene resin, HIPS resin, ABS resin, AS resin, MS resin, and the like; polyphenylene ether resins; polycarbonate resins; polyester resins; polyacetal resins; polyvinyl chloride resins; and polyolefin resins, for example, polyethylene, polypropylene, and the like.

A blending amount of these polymers is preferably 10 parts by mass or less, more preferably 5 parts by mass, and most preferably 0 parts by mass with respect to 100 parts by mass of the total of the polylactic acid polymer (D) and the (meth)acrylic polymer (B 1).

Since the molded article to be obtained has excellent transparency, impact resistance, heat resistance, and flexural mechanical properties, it is preferable that the resin composition according to the second embodiment of the present invention contains, with respect to the total mass (100 mass%) of the resin composition, 30 mass% or more and 70 mass% or less of the total of the polylactic acid polymer (D) and the (meth)acrylic polymer (B1) and 30 mass% or more and 70 mass% or less of the graft copolymer (A). It is more preferable to contain 40 mass% or more and 67 mass% or less of the total of the polylactic acid polymer (D) and the (meth)acrylic polymer (B 1) and 33 mass% or more and 60 mass% or less of the graft copolymer (A). It is still more preferable to contain 50 mass% or more and 65 mass% or less of the total of the polylactic acid polymer (D) and the (meth)acrylic polymer (B1) and 35 mass% or more and 50 mass% or less of the graft copolymer (A).

<Polylactic acid polymer (D)>

The polylactic acid polymer (D) is one of constituent components of the resin composition according to the second embodiment of the present invention.

By containing the polylactic acid polymer (D) in the resin composition according to the second embodiment of the present invention, the molded article to be obtained can have improved impact resistance and excellent transparency.

As the polylactic acid polymer (D) used in the present invention, a polylactic acid or a lactic acid copolymer obtained by co-polymerizing a lactic acid monomer with other components can be used. In addition, a mixture of these polymers can also be used.

The polylactic acid can be synthesized by a known method. For example, the polylactic acid can be synthesized by direct dehydration condensation from lactic acid or by ring-opening polymerization of lactic acid cyclic dimer lactide, as described in Japanese Unexamined Patent Application, First Publication No. H7-33861, Japanese Unexamined Patent Application, First Publication No. S59-96123, or Proceedings of the Symposium on Polymer Science, Vol. 44, pp. 3198 and 3199.

When the direct dehydration condensation is carried out, any lactic acid of L-lactic acid, D-lactic acid, DL-lactic acid, or a mixture of these lactic acids may be used. In addition, when the ring-opening polymerization is carried out, any lactide of L-lactide, D-lactide, DL-lactide, meso-lactide, or a mixture of these lactides may be used.

Synthesis, purification, and polymerization procedure of the lactide are described in various documents such as United States Patent No. 4057537, European Patent Application, Publication No. 261572, Polymer Bulletin, 14, pp. 491 to 495 (1985), and Makromol CheAG-187, pp. 1611 to 1628 (1986).

A constitutional molar ratio (L/D) of an L-lactic acid unit to a D-lactic acid unit in the polylactic acid may be any one of 100/0 to 0/100. The LID is preferably 100/0 to 60/40 and more preferably 100/0 to 80/20.

The lactic acid copolymer is a copolymer of a lactic acid monomer or lactide with other copolymerizable components. As the other copolymerizable components, dicarboxylic acids, polyhydric alcohols, hydroxycarboxylic acids, lactones, and the like, which have two or more functional groups capable of forming an ester bond, are exemplary examples. As the dicarboxylic acid, for example, succinic acid, azelaic acid, sebacic acid, terephthalic acid, isophthalic acid, and the like are exemplary examples.

As the polyhydric alcohol, for example, aromatic polyhydric alcohols such as compounds obtained by addition reaction of ethylene oxide to bisphenol; aliphatic polyhydric alcohols such as ethylene glycol, propylene glycol, butanediol, hexanediol, octanediol, glycerin, sorbitan, trimethylolpropane, and neopentyl glycol; ether glycols such as diethylene glycol, triethylene glycol, polyethylene glycol, and polypropylene glycol; and the like are exemplary examples.

As the hydroxycarboxylic acid, for example, glycolic acid, hydroxybutylcarboxylic acid, 3-hydroxybutyric acid, 4-hydroxybutyric acid, 3-hydroxyvaleric acid, 4-hydroxyvaleric acid, 6-hydroxycaproic acid, compound described in Japanese Unexamined Patent Application, First Publication No. H6-184417, and the like are exemplary examples.

As the lactone, for example, glycolide, ε-caprolactone glycolide, ε-caprolactone, β-propiolactone, δ-butyrolactone, β- or γ-butyrolactone, pivalolactone, δ-valerolactone, and the like are exemplary examples.

Biodegradability of the lactic acid copolymer is affected by a content of lactic acid units in the copolymer. Therefore, the content of the lactic acid units in the lactic acid copolymer is preferably 50 mol% or more and more preferably 70 mol% or more, although the content thereof depends on the copolymerizable component to be used. Due to the content of the lactic acid units or due to the copolymerizable component, mechanical properties or biodegradability of the product to be obtained can be improved.

The polylactic acid polymer (D) is not particularly limited, and when the polylactic acid polymer is crystalline one, it is normally preferable to use a polylactic acid polymer having a melting point of 60°C to 200°C and a mass-average molecular weight of 50,000 to 500,000. It is more preferable to use a polylactic acid polymer having a mass-average molecular weight of 100,000 to 300,000.

In addition, for the purpose of obtaining the same effect as using the copolymer, the polylactic acid may simply contain other aliphatic polyesters blended therein. In this case, the content of the polylactic acid contained in the blend is preferably 50 mol% or more and more preferably 70 mol% or more in terms of moles.

As the polylactic acid polymer (D), a commercially available product can be used, and for example, Ingeo biopolymers "2003D", "2500HP", "4032D", "4043D", and the like, manufactured by NatureWorks LLC, are exemplary examples.

<(Meth)acrylic polymer (B1)>

The (meth)acrylic polymer (B1) is one of constituent components of the resin composition according to the second embodiment of the present invention.

By containing the (meth)acrylic polymer (B1) in the resin composition according to the second embodiment of the present invention, the molded article to be obtained can have excellent heat resistance.

The (meth)acrylic polymer (B1) is a polymer containing a methyl methacrylate monomer unit, a homopolymer of methyl methacrylate or a copolymer of methyl methacrylate and a monomer copolymerizable with the methyl methacrylate can be used. When the copolymer is used, it is preferable to use a copolymer containing 50 mass% or more, preferably 70 mass% or more and more preferably 90 mass% or more, of the methyl methacrylate monomer unit.

As the other monomers copolymerizable with the methyl methacrylate, alkyl acrylates such as methyl acrylate, ethyl acrylate, and butyl acrylate; other alkyl methacrylates such as ethyl methacrylate and butyl methacrylate; aromatic vinyl monomers such as styrene; cyanide vinyl monomers such as acrylonitrile; cyclohexylmaleimide; phenylmaleimide; maleic acid anhydride; and glutaric acid anhydride can also be used.

From the viewpoint of high transparency and heat resistance, it is preferable to use a copolymer of methyl methacrylate and methyl acrylate among the monomers described above.

A method for producing the (meth)acrylic polymer (B 1) is not particularly limited, and various known methods such as suspension polymerization, bulk polymerization, and emulsion polymerization can be adopted. A molecular weight of the (meth)acrylic polymer (B1) is not particularly limited, but a mass-average molecular weight thereof is preferably 40,000 to 300,000.

As the (meth)acrylic polymer (B 1), a commercially available produce can be used, and for example, ACRYPET "VH", "MF", "MD", "TN-100", and the like, manufactured by Mitsubishi Chemical Corporation, are exemplary examples.

<Graft copolymer (A)>

The graft copolymer (A) is one of constituent components of the resin composition according to the second embodiment of the present invention.

By containing the graft copolymer (A) in the resin composition according to the second embodiment of the present invention, the molded article to be obtained can have excellent transparency and flexural mechanical properties.

The graft copolymer (A) in the present invention is a copolymer obtained by graft-polymerizing a vinyl monomer (a2) to a rubber-like polymer (A1) which is at least one selected from a polyorganosiloxane/acrylic rubber, a diene rubber, and an acrylic rubber.

A particle size of the graft copolymer (A) affects strength and transparency.

A mass-average particle size of the graft copolymer (A) in the present invention is not particularly limited, but is preferably 10 to 700 nm.

The mass-average particle size of the graft copolymer (A) can be measured with a capillary particle size distribution meter.

As a method for adjusting the mass-average particle size of the graft copolymer (A) to a desired range, a method for adjusting an amount of an emulsifier used during the production of the rubber-like polymer (A1) is an exemplary example.

A difference Rc - Rab between a refractive index Rc of the graft copolymer (A) and a total refractive index Rab of the polylactic acid polymer (D) and the (meth)acrylic polymer (B 1) affects the transparency of the resin composition.

In the resin composition according to the second embodiment of the present invention, it is preferable that the refractive index Rc of the graft copolymer (A) and the total refractive index Rab of the polylactic acid polymer (D) and the (meth)acrylic polymer (B1) satisfy Expression (1A).

$$-0.03 \leq Rc - Rab \leq +0.03 \cdots \text{Expression (1A)}$$

Furthermore, it is more preferable to satisfy Expression (2A).

$$-0.02 \leq Rc - Rab \leq +0.02 \cdots \text{Expression (2A)}$$

The refractive index Rc of the graft copolymer (A) can be measured with an Abbe refractometer.

The total refractive index Rab of the polylactic acid polymer (D) and the (meth)acrylic polymer (B 1) refers to a value obtained by mixing, in advance, the polylactic acid polymer and the acrylic polymer which constitute the resin composition at the used ratio, and measuring a refractive index thereof with an Abbe refractometer.

In order to set the refractive index Rc of the graft copolymer (A) and the total refractive index Rab of the polylactic acid polymer (D) and the (meth)acrylic polymer (B 1) within a predetermined range, the following method is used.

That is, for example, for a resin composition having a high content of the (meth)acrylic polymer (B 1) and a high Rab value, it is preferable to use a graft copolymer obtained by using an acrylic rubber and a polyorganosiloxane/acrylic rubber having a high acrylic rubber content. In this case, when polymerizing the acrylic rubber, by containing, as a copolymerizable component, an aromatic vinyl monomer having a higher refractive index, it is possible to further increase the refractive index Rc of the graft copolymer.

Conversely, for a resin composition having a low Rab value, it is preferable to use a graft copolymer obtained by using a polyorganosiloxane/acrylic rubber having a high polyorganosiloxane rubber content. Furthermore, by using an alkyl (meth)acrylate having a long alkyl chain as the acrylic rubber in the polyorganosiloxane/acrylic rubber, the refractive index Rc of the graft copolymer can be lowered. In addition, when using a graft copolymer obtained by using an acrylic rubber, by using an acrylic rubber with an alkyl (meth)acrylate having a long alkyl chain, the refractive index Rc of the graft copolymer can be lowered.

Furthermore, by adjusting the type and amount of vinyl monomer graft-copolymerized with the rubber-like polymer, the refractive index Rc of the graft copolymer (A) can also be adjusted.

By using the above-described predetermined graft copolymer (A), it is possible to obtain a resin composition with which a molded article having high transparency and excellent flexural mechanical properties can be obtained.

<Rubber-like polymer (A1)>

The rubber-like polymer used in the graft copolymer of the second embodiment of the present invention is at least one selected from a polyorganosiloxane/acrylic rubber, a diene rubber, and an acrylic rubber. By using these rubbers as the rubber-like polymer, it is possible to obtain a graft copolymer having excellent flexural mechanical properties.

(Acrylic rubber)

The acrylic rubber in the present invention is rubber obtained polymerizing an alkyl (meth)acrylate. The acrylic rubber is obtained by polymerizing an alkyl (meth)acrylate, optionally a cross-linking agent (CI), and optionally a graft-liking agent (GI).

The acrylic rubber in the present invention excludes a diene rubber having a structural unit derived from acrylic acid ester, among diene rubbers described later.

Specific examples of the alkyl (meth)acrylate are not particularly limited, and methyl acrylate, ethyl acrylate, n-propyl acrylate, n-butyl acrylate, 2-ethylhexyl acrylate, octyl acrylate, tridecyl acrylate, ethoxyethoxyethyl acrylate, methoxytripropylene glycol acrylate, 4-hydroxybutyl acrylate, lauryl acrylate, lauryl methacrylate, stearyl methacrylate, and the like are exemplary examples. These can be used alone or in combination of two or more thereof. From the viewpoint of strength development, as the alkyl (meth)acrylate, n-butyl acrylate, 2-ethylhexyl acrylate, octyl acrylate, lauryl acrylate, tridecyl acrylate, lauryl methacrylate, tridecyl methacrylate, stearyl methacrylate, or the like is particularly preferable. The amount of the alkyl (meth)acrylate used in 100 mass% of the total monomers constituting the acrylic rubber is preferably 60 mass% or more and more preferably 70 mass% or more.

As the cross-linking agent (CI), for example, ethylene glycol dimethacrylate, propylene glycol dimethacrylate, 1,3-butylene glycol dimethacrylate, 1,4-butylene glycol dimethacrylate, divinylbenzene, polyfunctional methacrylic group-modified silicone, and the like are exemplary examples. The cross-linking agent (CI) may not be used, or the amount of the cross-linking agent (CI) used in 100 mass% of the total monomers constituting the acrylic rubber is preferably 0 to 10 mass%, more preferably 0.2 to 6 mass%, and still more preferably 0.4 to 3 mass%.

As the graft-liking agent (GI), a monomer having an allyl group alone or a bifunctional or higher monomer having an allyl group and a (meth)acryloyl group can be used, and as such monomers, allyl methacrylate, triallyl cyanurate, triallyl isocyanurate, and the like are exemplary examples. These graft-liking agents (GI) also function as the cross-linking agent. The amount of the graft-liking agent (GI) used in 100 mass% of the total monomers constituting the acrylic rubber is preferably 0 to 10 mass%, more preferably 1 to 10 mass%, and still more preferably 2 to 10 mass%.

The cross-linking agent (CI) and the graft-liking agent (GI) can be used alone or in combination of two or more thereof.

During preparing the acrylic rubber, for the purpose of adjusting the refractive index of the graft copolymer (A), an aromatic vinyl monomer may be used in combination.

As specific examples of the aromatic vinyl monomer, styrene, $\alpha$-methylstyrene, vinyltoluene, and the like are exemplary examples. The amount of the aromatic vinyl monomer used in 100 mass% of the total monomers constituting the acrylic rubber is preferably 20 mass% or less and more preferably 10 mass% or less.

From the viewpoint of strength development, the acrylic rubber is preferably a polymer having a glass transition temperature of 0°C or lower. Here, the glass transition temperature of the acrylic rubber is measured as a transition point of Tan $\delta$ with a dynamic mechanical property analyzer (DMA).

A method for producing the acrylic rubber is not particularly limited, and the acrylic rubber can be polymerized by a known emulsion polymerization method.

<Polyorganosiloxane/acrylic rubber>

The polyorganosiloxane/acrylic rubber in the present invention is rubber containing polyorganosiloxane rubber obtained by polymerizing organosiloxane and the above-described acrylic rubber. Rubber composed of the above-described polyorganosiloxane rubber and the above-described acrylic rubber is preferable. The polyorganosiloxane rubber is obtained by polymerizing organosiloxane, optionally a cross-linking agent (CII), and optionally a graft-liking agent (GII).

As the organosiloxane, various cyclic compounds having a three or more-membered ring are exemplary examples, which include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, and the like. Among these, a cyclic compound having a three- to six-membered ring is preferably used. These compounds can be used alone or as a mixture of two or more thereof. The amount of the organosiloxane used in 100 mass% of the total monomers constituting the polyorganosiloxane rubber is preferably 80 mass% or more and more preferably 90 mass% or more.

As the cross-linking agent (CII), trifunctional or tetrafunctional silane cross-linking agents such as trimethoxymethylsilane, triethoxyphenylsilane, tetramethoxysilane, tetraethoxysilane, tetra-n-propoxysilane, and tetrabutoxysilane are exemplary examples. In particular, a tetrafunctional cross-linking agent is preferable, and among them, tetraethoxysilane is particularly preferable. The amount of the cross-linking agent (CII) used in 100 mass% of the total monomers constituting the polyorganosiloxane rubber is preferably 0 to 10 mass%, more preferably 1 to 10 mass%, and still more preferably 2 to 10 mass%.

As the graft-liking agent (GII), compounds capable of forming units represented by the following formulae are exemplary examples.

$$CH_2=C(R^2)-COO-(CH_2)_p-SiR^1{}_nO_{(3-n)/2} \qquad \text{(GII-1)}$$

$$CH_2=C(R^2)-C_6H_4-SiR^1{}_nO_{(3-n)/2} \qquad \text{(GII-2)}$$

$$CH_2=CH-SiR^1{}_nO_{(3-n)/2} \qquad \text{(GII-3)}$$

$$HS=(CH_2)_p-SiR^1{}_nO_{(3-n)/2} \qquad \text{(GII-4)}$$

(in the formulae, $R^1$ is a methyl group, an ethyl group, a propyl group, or a phenyl group, $R^2$ is a hydrogen atom or a methyl group, n is 0, 1, or 2, and p represents a number of 1 to 6)

As the compound capable of forming the unit of Formula (GII-1), methacryloyloxysiloxane is particularly preferable. As specific examples of the methacryloyloxysiloxane, β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane, γ-methacryloyloxybutyldiethoxymethylsilane, and the like are exemplary examples.

As the compound capable of forming the unit of Formula (GII-2), p-vinylphenyldimethoxymethylsilane is an exemplary example.

As the compound capable of forming the unit of Formula (GII-3), vinylsiloxane is an exemplary example, and as a specific example thereof, tetramethyltetravinylcyclotetrasiloxane is an exemplary example.

As the compound capable of forming the unit of Formula (GII-4), γ-mercaptopropyldimethoxymethylsilane, γ-mercaptopropylmethoxydimethylsilane, γ-mercaptopropyldiethoxymethylsilane, and the like are exemplary examples.

The amount of the graft-liking agent (GII) used in 100 mass% of the total monomers constituting the polyorganosiloxane rubber is preferably 0 to 10 mass% and more preferably 0.5 to 5 mass%.

A method for producing the polyorganosiloxane rubber is not particularly limited, and it is preferable to polymerize the polyorganosiloxane rubber by emulsion polymerization.

For producing latex of the polyorganosiloxane component, for example, methods described in United States Patent No. 2891920, United States Patent No. 3294725, and the like can be used. In the present invention, for example, it is preferable to produce the latex of the polyorganosiloxane component by a method of shear-mixing a mixed solution of organosiloxane, the cross-linking agent (CII), and the graft-liking agent (GII) optionally with water using, for example, a homogenizer in the presence of a sulfonic acid-based emulsifier such as alkylbenzenesulfonic acid and alkylsulfonic acid. The alkylbenzenesulfonic acid is suitable because it functions as the emulsifier for the organosiloxane and also as a polymerization initiator. In this case, it is preferable to use a metal alkylbenzenesulfonate, a metal alkylsulfonate, or the like in combination, because it is effective in maintaining stability of the polymer during the graft polymerization.

As the acrylic rubber in the polyorganosiloxane/acrylic rubber, the above-described acrylic rubber can be used.

From the viewpoint of transparency and strength, a ratio of each rubber component in the polyorganosiloxane/acrylic rubber is preferably in a range of 1 to 70 mass% of the polyorganosiloxane rubber and 99 to 30 mass% of the acrylic rubber (the total amount of both components is 100 mass%).

From the viewpoint of strength development, the polyorganosiloxane/acrylic rubber preferably has a gel content of 80 mass% or more, which is measured by extraction with toluene at 90°C for 4 hours.

A method for producing the polyorganosiloxane/acrylic rubber is not particularly limited, and a method in which the latex of the polyorganosiloxane rubber is first prepared by emulsion polymerization, particles of the latex of the polyorganosiloxane rubber are impregnated with a monomer constituting the acrylic rubber, and then polymerizing them is preferable.

<Diene rubber>

The diene rubber in the present invention is a rubber-like polymer having a constituent unit derived from a diene compound. In addition, the diene rubber may have a constituent unit derived from other vinyl monomers as necessary. In particular, it is preferable that the diene rubber is a polymer having a constituent unit with a glass transition temperature of -20°C or lower.

Specifically, as the diene rubber, butadiene rubbers such as polybutadiene, a styrene/butadiene copolymer, and an acrylic acid ester/butadiene copolymer; and conjugated diene rubbers such as a styrene/isoprene copolymer are exemplary examples. These can be used alone or as a mixture of two or more thereof. These butadiene rubbers can be used from a monomer, and the butadiene rubber may have a core/shell structure. For example, a butadiene rubber having a core of polybutadiene and a shell of acrylic acid ester can be used.

The monomer (diene monomer) which is a raw material for the constituent unit derived from a diene compound is not particularly limited, and diene monomers such as butadiene and isoprene, for example, 1,3-butadiene are exemplary examples.

As the monomer which is a raw material for the constituent unit derived from other vinyl monomers described above, monofunctional monomers such as methyl (meth)acrylate, ethyl (meth)acrylate, butyl (meth)acrylate, 2-ethylhexyl (meth)acrylate, lauryl (meth)acrylate, stearyl acrylate, t-butyl acrylate, styrene, and acrylonitrile; and polyfunctional monomers such as divinylbenzene, ethylene glycol dimethacrylate, butylene glycol diacrylate, triallyl cyanurate, triallyl isocyanurate, trimethylolpropane triacrylate, and pentaerythritol tetraacrylate are exemplary examples. These can be used alone or in combination of two or more thereof. Among these, from the viewpoint of polymerization stability of the emulsion polymerization, an alkyl acrylate having 2 to 8 carbon atoms and/or styrene is preferable, an alkyl acrylate having 3 to 6 carbon atoms and/or styrene is more preferable, and butyl acrylate and/or styrene is particularly preferable. These can be used alone or in combination of two or more thereof.

Furthermore, the butadiene rubber can also optionally contain an acrylic rubber such as polybutyl acrylate, an olefin rubber such as an ethylene/propylene copolymer, or a non-diene rubber-like polymer, for example, a silicone rubber such as polyorganosiloxane, in an amount of up to 25 weight% or less in 100 weight% of the rubber-like polymer.

These can have optionally a structural unit derived from a cross-linking agent (CI) and optionally a structural unit derived from a graft-liking agent (GI).

As the cross-linking agent (CI), for example, ethylene glycol dimethacrylate, propylene glycol dimethacrylate, 1,3-butylene glycol dimethacrylate, 1,4-butylene glycol dimethacrylate, divinylbenzene, polyfunctional methacrylic group-modified silicone, and the like are exemplary examples. The amount of the cross-linking agent (CI) used in 100 mass% of the total monomers constituting the butadiene rubber is preferably 0 to 10 mass%, more preferably 1 to 10 mass%, and still more preferably 2 to 10 mass%.

As the graft-liking agent (GI), a monomer having an allyl group alone or a bifunctional or higher monomer having an allyl group and a (meth)acryloyl group can be used, and as such monomers, allyl methacrylate, triallyl cyanurate, triallyl isocyanurate, and the like are exemplary examples. These graft-liking agents (GI) also function as the cross-linking agent. The amount of the graft-liking agent (GI) used in 100 mass% of the total monomers constituting the butadiene rubber is preferably 0 to 10 mass%, more preferably 1 to 10 mass%, and still more preferably 2 to 10 mass%.

The cross-linking agent (CI) and the graft-liking agent (GI) can be used alone or in combination of two or more thereof.

During preparing the diene rubber, for the purpose of adjusting the refractive index of the graft copolymer (A), an aromatic vinyl monomer may be used in combination.

As specific examples of the aromatic vinyl monomer, styrene, α-methylstyrene, vinyltoluene, and the like are exemplary examples. The amount of the aromatic vinyl monomer used in 100 mass% of the total monomers constituting the butadiene rubber is preferably 20 mass% or less and more preferably 10 mass% or less.

From the viewpoint of strength development, the diene rubber is preferably a polymer having a glass transition temperature of 0°C or lower. Here, the glass transition temperature of the diene rubber is measured as a transition point of Tan δ with a dynamic mechanical property analyzer (DMA).

A method for producing the diene rubber is not particularly limited, and the diene rubber can be polymerized by a known emulsion polymerization method.

<Content of crosslinkable monomer>

A content of crosslinkable monomers contained in the rubber-like polymer (A1) affects both strength and whitening on bending of the resin composition. Here, the crosslinkable monomers refer to the cross-linking agents (CI and CII) and the graft-liking agent (GI).

The total amount of these crosslinkable monomers used in 100 mass% of the total monomers constituting the rubber-like polymer (A1) is preferably 0.3 to 10 mass%, more preferably 1 to 10 mass%, and still more preferably 2 to 10 mass%. By setting the total amount of the crosslinkable monomers used within the range, it is possible to effectively suppress the whitening on bending while maintaining strength.

<Graft>

The graft copolymer (A) can be obtained by graft-polymerizing a vinyl monomer (a2) in the presence of the rubber-like polymer (A1), as described above.

The vinyl monomer (a2) is not particularly limited. As specific examples thereof, various vinyl monomers including aromatic vinyl monomers such as styrene, α-methylstyrene, and vinyltoluene; methacrylic acid esters such as methyl methacrylate and 2-ethylhexyl methacrylate; acrylic acid esters such as methyl acrylate, ethyl acrylate, and n-butyl acrylate; cyanide vinyl compounds such as acrylonitrile and methacrylonitrile are exemplary examples. These vinyl monomers can be used alone or in combination of two or more thereof.

From the viewpoint of strength and heat resistance, the vinyl monomer may contain a crosslinkable monomer. As specific examples thereof, monomers functioning as a cross-linking agent, such as ethylene glycol dimethacrylate, propylene glycol dimethacrylate, 1,3-butylene glycol dimethacrylate, 1,4-butylene glycol dimethacrylate, divinylbenzene, and polyfunctional methacrylic group-modified silicone; and allyl methacrylate, triallyl cyanurate, triallyl isocyanurate, and the like are exemplary examples.

As the graft polymerization, dropwise polymerization can be generally used. In addition, one-stage or multi-stage polymerization can be used.

<Graft copolymer (A)>

As for a ratio of the rubber-like polymer (A1) and the graft in the graft copolymer based on 100 parts by mass of the total of both, the amount of the rubber-like polymer is preferably 60 to 99 parts by mass, and more preferably 65 to 95 parts by mass. In addition, the amount of the graft is preferably 1 to 40 parts by mass, and more preferably 5 to 30 parts by mass. When the amount of the graft part is 1 part by mass or more, the resulting graft copolymer has favorable dispersibility in the resin composition, and the processability of the resin composition is improved. On the other hand, when the amount of the graft part is 40 parts by mass or less, the strength development of the graft copolymer is improved.

The graft copolymer (A) is usually obtained as a latex. The graft copolymer obtained as the latex is preferably recovered as powder or granules by spray recovery or wet coagulation with a coagulant such as acid and salt. However, when a functional group is included, the wet coagulation with an acid is not preferable. This is because the use of an acid may deactivate the functional group or adversely affect the functional group. In addition, when the wet coagulation with a salt is performed, alkaline earth metal salts such as calcium acetate, calcium chloride, and magnesium sulfate are preferably used. By using the alkaline earth metal, deterioration such as decomposition of a matrix resin due to moisture and heat can be suppressed as much as possible. When the deterioration of the matrix resin can be suppressed, resistance to moisture and heat of the molded article formed of the resin composition is improved. The resistance to moisture and heat affects the strength development of the molded article, and greatly affects recyclability of the molded article.

Furthermore, as a recovery method in consideration of the recyclability, a spray recovery method which does not include the salts themselves for the coagulant is effective. When the spray recovery method is performed, in addition to the graft copolymer, fillers or other polymers can be co-sprayed at the same time, and the both can be combined and recovered as a powder. By selecting the type of co-spray, it is also possible to achieve more preferred handleability of powder properties. As the component to be co-sprayed, calcium components, silica, hard vinyl copolymers, and the like are exemplary examples.

<Fatty acid compound (C)>

In the resin composition according to the second embodiment of the present invention, by containing the fatty acid compound (C), the molded article to be obtained can have excellent slidability while maintaining favorable transparency, impact resistance, heat resistance, and mechanical properties such as flexural modulus and flexural stress.

In the present invention, as the fatty acid compound (C), from the viewpoint of easily making the molded article to be obtained excellent in slidability, a chain-like hydrocarbon compound having, in the molecule, one or more functional groups which are at least one functional group selected from a carbonyl group, a carboxyl group, an amide group, and an ester group is preferable. The above-described chain-like hydrocarbon compound means a compound in which a carbon atom to which the at least one functional group selected from a carbonyl group, a carboxyl group, an amide group, and an ester group is a constituent atom of the carbon chain. The carbon chain in the above-described chain-like hydrocarbon compound may be saturated or unsaturated, and may be linear or branched.

With regard to the above-described fatty acid compound (C), as the chain-like hydrocarbon compound having a carboxyl group in the molecule, fatty acids and derivatives thereof are exemplary examples. As the chain-like hydrocarbon compound having an amide group in the molecule, fatty acid amides and derivatives thereof are exemplary examples. As the chain-like hydrocarbon compound having an ester group or a carbonyl group in the molecule, fatty acid alkyl esters and derivatives thereof or fatty acid glycerides and derivatives thereof are exemplary examples.

The derivative of fatty acid, the derivative of fatty acid amide, the derivative of fatty acid alkyl ester, and the derivative of fatty acid glyceride are compounds having a structure in which some or all of hydrogen atoms in the chain-like hydrocarbon compound or in the side chain are replaced with other organic groups. As the organic group, for example, a polyether group, a polyalkyl group, an aralkyl group, and a polyester group are exemplary examples, and these may be used alone or in combination of two or more.

Furthermore, as the derivative of fatty acid amide, it is possible to appropriately select and use from various compounds such as monoamides and bisamides according to various situations.

These fatty acid compounds (C) can be used alone or in combination of two or more thereof.

Among these fatty acid compounds (C), a fatty acid amide compound and a derivative thereof (hereinafter, collectively referred to as "fatty acid amide compound (C1)") are preferable.

As the fatty acid amide compound (C1), it is possible to contain a compound represented by General Formula (i) (hereinafter, also referred to as "compound (i)") as a main component. The compound (i) is preferable from the viewpoint that the slidability of the molded article to be obtained is excellent even when the blending amount is small, and the original performance of the (meth)acrylic resin is unlikely to be impaired.

$$R\text{-}CONH_2 \qquad (i)$$

(in General Formula (i), R is a hydrocarbon group having 10 to 25 carbon atoms, which may have a substituent)Here, "containing as a main component" means that the above-described fatty acid compound (C) contains 85.0 mass% or more of the fatty acid amide compound (C1) with respect to the total mass (100 mass%) of the fatty acid compound (C).

From the viewpoint of excellent compatibility with the (meth)acrylic polymer (B1) and excellent slidability of the molded article to be obtained, the lower limit of the number of carbon atoms in R of Formula (i) of the fatty acid amide compound (C1) is preferably 10 or more, more preferably 15 or more, and still more preferably 17 or more. From the viewpoint of improving dispersibility of the fatty acid compound (C) in the resin composition and maintaining favorable slidability of the molded article to be obtained, the upper limit of the number of carbon atoms in R of Formula (i) of the fatty acid amide compound (C1) is preferably 25 or less, more preferably 24 or less, and still more preferably 23 or less.

The above-described preferred upper limit and preferred lower limit can be combined arbitrarily. For example, the number of carbon atoms in R of Formula (i) of the fatty acid amide compound is preferably 10 to 25, more preferably 15 to 24, and still more preferably 17 to 23.

The fatty acid amide compound (C1) is preferred because it tends to be excellent in compatibility with the (meth)acrylic polymer (B1), fluidity of the resin composition, and slidability of the molded article to be obtained.

As the fatty acid amide compound (C1), for example, a saturated fatty acid amide compound, an unsaturated fatty acid amide compound, a bis-fatty acid amide compound, and a methylol fatty acid amide compound are exemplary examples. These fatty acid amide compounds can be used alone or in combination of two or more thereof. In addition, among these fatty acid amide compounds (C1), a saturated fatty acid amide compound is preferred because the slidability of the molded article to be obtained is more excellent.

As the saturated fatty acid amide compound, for example, lauric acid amide, palmitic acid amide, stearic acid amide, behenic acid amide, hydroxystearic acid amide, and methylol stearic acid amide are exemplary examples.

These saturated fatty acid amide compounds can be used alone or in combination of two or more thereof.

From the viewpoint that the slidability of the molded article to be obtained is excellent, it is preferable that the saturated fatty acid amide compound contains any of stearic acid amide or palmitic acid amide, and it is preferable that the saturated fatty acid amide compound contains at least one selected from stearic acid amide and palmitic acid amide as a main component.

Here, "containing as a main component" means that the above-described fatty acid compound (C) contains 85.0 mass% or more of at least one selected from stearic acid amide and palmitic acid amide or contains 85.0 mass% or more of the total of stearic acid amide and palmitic acid amide, with respect to the total mass (100 mass%) of the fatty acid compound (C).

As the unsaturated fatty acid amide compound, for example, erucic acid amide, oleic acid amide, brassic acid amide, and elaidic acid amide are exemplary examples.

These unsaturated fatty acid amide compounds can be used alone or in combination of two or more thereof.

Among these unsaturated fatty acid amide compounds, from the viewpoint that the slidability of the molded article to be obtained is excellent, erucic acid amide or oleic acid amide is preferable, and erucic acid amide is more preferable.

As the bis-fatty acid amide compound, for example, bis-fatty acid amides such as methylenebisstearic acid amide, methylenebisoleic acid amide, ethylenebisstearic acid amide, and ethylenebisoleic acid amide; stearyl stearic acid amide, stearyl erucic acid amide, and oleyl palmitic acid amide are exemplary examples.

These bis-fatty acid amide compounds can be used alone or in combination of two or more thereof.

The resin composition according to the second embodiment of the present invention can contain 0.01 parts by mass or more and 10 parts by mass or less of the fatty acid compound (C) with respect to 100 parts by mass of the total of the polylactic acid polymer (D) and the (meth)acrylic polymer (B1).

When the lower limit of the content of the fatty acid compound (C) is more than 0.01 parts by mass with respect to 100 parts by mass of the total of the polylactic acid polymer (D) and the (meth)acrylic polymer (B1), the slidability of the molded article to be obtained is excellent. The lower limit thereof is more preferably 0.1 parts by mass or more, and still more preferably 1.0 part by mass or more. On the other hand, when the upper limit of the content of the above-described fatty acid compound (C) is 10 parts by mass or less, the molded article to be obtained does not impair the original performance of the acrylic resin. The upper limit thereof is more preferably 5.0 parts by mass or less, and still more preferably 3.0 parts by mass or less.

The upper and lower limits of the content of the fatty acid compound (C) can be combined arbitrarily. For example, the content of the fatty acid compound (C) is preferably 0.01 parts by mass or more and 10 parts by mass or less, more preferably 0.1 parts by mass or more and 5.0 parts by mass or less, and still more preferably 1.0 part by mass or more and 3.0 parts by mass or less with respect to 100 parts by mass of the total of the polylactic acid polymer (D) and the (meth) acrylic polymer (B1).

<Method for producing resin composition>

A method for producing the resin composition according to the second embodiment of the present invention is not particularly limited. Various known mixing methods in the related art can be used, and a melt mixing method is generally preferable. In addition, a small amount of a solvent may be used as necessary. As a device used for the mixing, an extruder, a Banbury mixer, a roller, a kneader, and the like are exemplary examples. These devices may be operated batchwise or continuously. The mixing order of the components is not particularly limited.

<Other additives>

When producing the resin composition according to the second embodiment of the present invention, as long as the physical properties are not impaired, other known additives such as various flame retardants and stabilizers may be added or may not be added at desired stages such as a stage of compounding the thermoplastic resin, a stage of kneading, and a stage of molding.

The flame retardant which can be used in the resin composition according to the second embodiment of the present invention is not particularly limited, and a halogen flame retardant, a phosphoric acid flame retardant, or a silicone flame retardant is preferably used because high flame retardancy can be exhibited without impairing strength and the like. As such a flame retardant, for example, a halogen-containing compound, a phosphoric acid compound, a silicone compound, a halogen-containing organic metal salt compound, and the like are exemplary examples.

As specific examples of the flame retardant, phosphoric acid compounds such as a phosphate ester compound, a phosphite ester compound, and a condensed phosphate ester compound; aluminum hydroxide; acid antimony compounds such as antimony trioxide and antimony pentoxide; halogen-containing compounds such as a halogen-containing phosphate compound, a halogen-containing condensed phosphate compound, a chlorinated paraffin, and a brominated aromatic compound, for example, brominated aromatic triazine and brominated phenyl alkyl ether; sulfone or sulfate compounds; epoxy reactive flame retardants; and the like are exemplary examples.

From the viewpoint of transparency, a blending amount of the flame retardant is preferably 10 parts by mass or less, more preferably 5 parts by mass, and most preferably 0 parts by mass with respect to 100 parts by mass of the total of the polylactic acid polymer (D) and the (meth)acrylic polymer (B 1).

As the stabilizer, metallic stabilizers and other stabilizers are exemplary examples.

As the metallic stabilizer, for example, lead stabilizers such as tribasic lead sulfate, dibasic lead phosphite, basic lead sulphate, and lead silicate; metal soap stabilizers derived from a metal such as potassium, magnesium, barium, zinc, cadmium, and lead and a fatty acid such as 2-ethylhexanoic acid, lauric acid, myristic acid, palmitic acid, stearic acid, isostearic acid, hydroxy stearic acid, oleic acid, ricinoleic acid, linoleic acid, and behenic acid; organic tin stabilizers derived from an alkyl group, an ester group, and the like, and a fatty acid salt, maleate, sulfide, and the like; composite metal soap stabilizers such as Ba-Zn, Ca-Zn, Ba-Ca-Sn, Ca-Mg-Sn, Ca-Zn-Sn, Pb-Sn, and Pb-Ba-Ca; metal salt stabilizers derived from a metal such as barium and zinc, and generally two or more organic acids of branched fatty acids such as 2-ethylhexanoic acid, isodecanoic acid, and trialkyl acetic acid, unsaturated fatty acids such as oleic acid, ricinoleic acid, and linoleic acid, cyclic fatty acids such as naphthenic acid, and aromatic acids such as carbolic acid, benzoic acid, salicylic acid, derivatives thereof; metal salt liquid stabilizers which are formed by dissolving these stabilizers in an organic solvent such as petroleum hydrocarbon, alcohol, and glycerol derivative, and then adding a stabilizing aid such as phosphite, an epoxy compound, an anti-coloring agent, a transparency-improvement agent, a light stabilizer, an antioxidant, a plate-out inhibitor, and a lubricant; and the like are exemplary examples.

As the other stabilizers, epoxy compounds such as an epoxy resin, epoxidized soybean oil, epoxidized vegetable oil, and epoxidized fatty acid alkyl ester; organic phosphites in which phosphorus is substituted with an alkyl group, an aryl group, a cycloalkyl group, an alkoxyl group, or the like, and which have a dihydric alcohol such as propylene glycol or an aromatic compound such as hydroquinone and bisphenol A; ultraviolet absorbers such as hindered phenols, for example, 2,4-di-t-butyl-3-hydroxytoluene (BHT) and bisphenols dimerized with sulfur or methylene groups, salicylates, benzophenones, and benzotriazoles; hindered amine or nickel complex light stabilizer; ultraviolet shielding agents such as carbon black and rutile-type titanium oxide; polyhydric alcohols such as trimethylolpropane, pentaerythritol, sorbitol, and mannitol; nitrogen-containing compounds such as β-aminocrotonate, 2-phenylindole, diphenylthiourea, and dicyandiamide; sulfur-containing compounds such as dialkylthiodipropionate; keto compounds such as acetoacetate, dehydroacetic acid, and β-diketone; organosilicon compounds; borate esters; and the like are exemplary examples. These stabilizers can be used alone or in combination of two or more thereof.

From the viewpoint of transparency, the amount of the stabilizer used is preferably 5 parts by mass or less, more preferably 2 parts by mass, and most preferably 0 parts by mass with respect to 100 parts by mass of the total of the polylactic acid polymer (D) and the (meth)acrylic polymer (B1).

The resin composition according to the second embodiment of the present invention can also additionally contain a processing aid, a plasticizer, a lubricant, a flame retardant, a heat resistance improver, a mold releasing agent, a crystalline nucleating agent, a flowability modifier, a coloring agent, an antistatic agent, an electric conductivity modifier, a surfactant, an anti-fogging agent, an anti-fungus agent, or the like.

As the processing aid, for example, a (meth)acrylic acid ester copolymer and the like are exemplary examples. From the viewpoint of transparency, the amount of the processing aid used is preferably 15 parts by mass or less, more preferably 5 parts by mass, and most preferably 0 parts by mass with respect to 100 parts by mass of the total of the polylactic acid polymer (D) and the (meth)acrylic polymer (B1).

As the plasticizer, for example, alkyl esters of an aromatic polybasic acid, such as dibutyl phthalate, dioctyl phthalate, diisodecyl phthalate, diisononyl phthalate, diundecyl phthalate, trioctyl trimellitate, and triisooctyl trimellitate; alkyl esters of a fatty polybasic acid, such as dibutyl adipate, dioctyl adipate, diisononyl adipate, dibutyl azelate, dioctyl azelate, and diisononyl azelate; phosphates such as tricresyl phosphate; polyester plasticizers such as compounds in which a terminal of a polycondensate is sealed with a monohydric alcohol or a monovalent carboxylic acid, the polycondensate having a molecular weight of approximately 600 to 8,000 and obtained from a polyvalent carboxylic acid such as adipic acid, azelaic acid, sebacic acid, and phthalic acid, or a polyhydric alcohol such as ethylene glycol, 1,2-propylene glycol, 1,2-butylene glycol, 1,3-butylene glycol, and 1,4-butylene glycol; epoxy plasticizers such as epoxidized soybean oil, epoxidized linseed oil, epoxidized tall oil, and fatty acid-2-ethylhexyl; chlorinated paraffins; and the like are exemplary examples. From the viewpoint of transparency, the amount of the plasticizer used is preferably 30 parts by mass or less, more preferably 10 parts by mass, and most preferably 0 parts by mass with respect to 100 parts by mass of the total of the polylactic acid polymer (D) and the (meth)acrylic polymer (B 1).

As the lubricant, for example, pure hydrocarbons such as liquid paraffin and low-molecular-weight polyethylene; halogenated hydrocarbons; fatty acids such as a higher fatty acid and an oxy fatty acid; fatty acid amides; polyhydric alcohol esters of a fatty acid, such as glyceride; aliphatic alcohol esters of a fatty acid (ester wax); metal soaps; aliphatic alcohols; polyhydric alcohols; polyglycols; polyglycerols; esters such as a partial ester of fatty acid and polyhydric alcohol and a partial ester of fatty acid, polyglycol, and polyglycerol; (meth)acrylic acid ester copolymers; and the like are exemplary examples. As the heat resistance improver, for example, (meth)acrylic acid ester copolymers, imide copolymers, styrene-acrylonitrile copolymers, and the like are exemplary examples. From the viewpoint of transparency, the amount of the lubricant used is preferably 5 parts by mass or less, more preferably 1 part by mass, and most preferably 0 parts by mass with respect to 100 parts by mass of the total of the polylactic acid polymer (D) and the (meth)acrylic polymer (B 1).

<Molded article>

The molded article according to the second embodiment of the present invention is obtained by molding the above-described resin composition. The molding method is not particularly limited, and a method suitable for the resin composition according to the second embodiment of the present invention may be selected from known molding methods. For example, molding methods using various molding devices such as an extruder, an injection molding machine, a blow molding machine, an inflation molding machine, and a calendar molding machine can be exemplary examples. Among these, in particular, from the viewpoint of imparting high transparency, it is preferable to use an extruder, an injection molding machine, a blow molding machine, or a calendar molding machine. In addition, secondary processing such as bending molding and blow molding may be performed using the molded article which has been primarily molded by the above-described method.

The molded article obtained in this manner can be used, for example, for building materials, automobiles, toys, miscellaneous goods such as stationery, OA equipment, home electric appliances, packages, vending machines, pachinko faceplates, and the like. However, since the molded article has excellent strength, transparency, and weather resistance, and is less likely to whiten when bended, and since it is possible to easily obtain a molded article with a favorable appearance when bending, blow molding, or vacuum molding a sheet or a film, the molded article obtained in this manner can be particularly preferably used for packages, vending machines, and pachinko faceplates.

<Resin composition>

The resin composition according to the third embodiment of the present invention is a resin composition contains a graft copolymer (A) containing a silicone component described later (hereinafter, simply referred to as "graft copolymer (A)"), a thermoplastic resin (B) described later, and a fatty acid compound (C) described later.

From the viewpoint of excellent impact resistance of the molded article to be obtained, the lower limit of the content proportion of the graft copolymer (A) contained in the resin composition according to the third embodiment of the present invention is preferably 1 mass% or more, more preferably 10 mass% or more, and still more preferably 20 mass% or more with respect to 100 mass% of the total mass of the resin composition. On the other hand, from the viewpoint that the molded article to be obtained does not impair the original performance of the thermoplastic resin, the upper limit of the content proportion of the graft copolymer (A) contained in the resin composition is preferably 50 mass% or less, more preferably 45 mass% or less, and still more preferably 40 mass% or less with respect to 100 mass% of the total mass of the resin composition.

The above-described preferred upper limit and preferred lower limit can be combined arbitrarily. For example, the content proportion of the graft copolymer (A) contained in the resin composition is preferably 1 mass% or more and 50 mass% or less, more preferably 10 mass% or more and 45 mass% or less, and still more preferably 20 mass% or more and 40 mass% or less with respect to 100 mass% of the total mass of the resin composition.

From the viewpoint that the molded article to be obtained does not impair the original performance of the thermoplastic resin, the lower limit of the content proportion of the thermoplastic resin (B) contained in the resin composition according to the third embodiment of the present invention is preferably 50 mass% or more, more preferably 55 mass% or more, and still more preferably 60 mass% or more with respect to 100 mass% of the total mass of the resin composition. On the other hand, from the viewpoint of excellent impact resistance of the molded article to be obtained, the upper limit of the content proportion of the thermoplastic resin (B) contained in the resin composition is preferably 99 mass% or less, more preferably 90 mass% or less, and still more preferably 80 mass% or less with respect to 100 mass% of the total mass of the resin composition.

The above-described preferred upper limit and preferred lower limit can be combined arbitrarily. For example, the content proportion of the thermoplastic resin (B) contained in the resin composition is preferably 50 mass% or more and 99 mass% or less, more preferably 55 mass% or more and 90 mass% or less, and still more preferably 60 mass% or more and 80 mass% or less with respect to 100 mass% of the total mass of the resin composition.

From the viewpoint of excellent scratch resistance, product processability, and impact resistance of the molded article to be obtained, the lower limit of the content proportion of the fatty acid compound (C) contained in the resin composition according to the third embodiment of the present invention is preferably 0.01 mass% or more, more preferably 0.1 mass% or more, and still more preferably 1.0 mass% or more with respect to 100 mass% of the total mass of the resin composition. On the other hand, from the viewpoint of maintaining favorable product processability and impact resistance of the molded article to be obtained and not impairing the original performance of the thermoplastic resin (B), the upper limit of the content proportion of the fatty acid compound (C) contained in the resin composition is preferably 10 mass% or less, and more preferably 6.0 mass% or less with respect to 100 mass% of the total mass of the resin composition. The upper limit thereof may be 3.0 mass% or less.

The above-described preferred upper limit and preferred lower limit can be combined arbitrarily. For example, the content proportion of the fatty acid compound (C) contained in the resin composition is preferably 0.01 mass% or more and 10 mass% or less, and more preferably 0.1 mass% or more and 6.0 mass% or less with respect to 100 mass% of the total mass of the resin composition. The content proportion thereof may be 1.0 mass% or more and 3.0 mass% or less.

Within a range that does not impair the effects of the third embodiment of the present invention, the resin composition according to the third embodiment of the present invention can further contain other thermoplastic resins such as styrene resins, for example, polystyrene (GPPS) resin, high impact polystyrene (HIPS) resin, ABS resin, SAN resin, AS resin, MS resin, and the like; polyphenylene ether resins; polycarbonate resins; polyester resins; polyacetal resins; polyvinyl chloride resins; and polyolefin resins, for example, polyethylene, polypropylene, and the like.

The content proportion of the other thermoplastic resins which can be contained in the resin composition according to the third embodiment of the present invention is 10 mass% or less with respect to 100 mass% of the total mass of the resin composition. The content proportion thereof is preferably 5 mass% or less. Alternatively, the resin composition according to the third embodiment of the present invention may not contain the other thermoplastic resins.

The lower limit of a gel content of the resin composition according to the third embodiment of the present invention is not particularly limited, but from the viewpoint of excellent impact resistance of the molded article to be obtained, the lower limit of the gel content thereof is 1 mass% or more. The lower limit of the gel content thereof is preferably 5 mass% or more, and more preferably 10 mass% or more. On the other hand, from the viewpoint of excellent product processability of the molded article to be obtained, the upper limit of the gel content of the resin composition is 35 mass% or less. The upper limit of the gel content of the resin composition is preferably 30 mass% or less, and more preferably 25 mass% or less.

The above-described preferred upper limit and preferred lower limit can be combined arbitrarily. For example, the gel content of the resin composition according to the embodiment of the present invention is preferably 1 mass% or more and 35 mass% or less, more preferably 5 mass% or more and 30 mass% or less, and still more preferably 10 mass% or more and 25 mass% or less.

A specific method for measuring the gel content of the resin composition will be described later.

The lower limit of a tensile elongation of the resin composition according to the third embodiment of the present invention is preferably 20% or more, and more preferably 25% or more. The tensile elongation is an indicator of product processability when producing a molded article containing the resin composition according to the third embodiment of the present invention or product processability when applying the molded article to various applications, and as the tensile elongation is larger, the product processability is favorable. The upper limit of the tensile elongation is not particularly limited, but when it is 60% or less, a residual stress of the molded article to be obtained can be reduced, and sag and wrinkles are less likely to occur in the product during transportation of the product or during manufacturing sampling in the manufacturing process. A method for achieving the tensile elongation of 20% or more is not particularly limited, and for example, a method of adjusting a formulation of the resin composition to the preferred types, combinations, and blending amounts described above is an exemplary example.

A specific method for measuring the tensile elongation will be described later.

<Graft copolymer (A)>

The graft copolymer (A) is one of constituent components of the resin composition according to the third embodiment of the present invention.

The graft copolymer (A) is a graft copolymer obtained by graft-polymerizing a monomer containing a (meth) acrylic acid compound, which will be described later, to a composite rubber (c) including polyorganosiloxane (a) and alkyl acrylate rubber (b), which will be described later.

As the graft copolymer (A), a graft copolymer obtained by graft-polymerizing 30 parts by mass or more and 70 parts by mass or less of the monomer containing a (meth)acrylic acid compound to 30 parts by mass or more and 70 parts by mass or less of the composite rubber (c) with respect to 100 parts by mass of the graft copolymer (A). When the content of the composite rubber (c) is 30 parts by mass or more, the impact resistance of the molded article will be favorable. The lower limit value of the content of the composite rubber (c) is more preferably 35 parts by mass or more, and still more preferably 40 parts by mass or more. In addition, when the content of the composite rubber (c) is 70 parts by mass or less, color development and appearance of the molded article will be favorable. The upper limit value of the content of the composite rubber (c) is more preferably 65 parts by mass or less, and still more preferably 60 parts by mass or less.

The monomer containing a (meth)acrylic acid compound, to be grafted to the composite rubber (c), can be 30 parts by mass or more and 70 parts by mass or less with respect to 100 parts by mass of the graft copolymer (A). When the monomer containing a (meth)acrylic acid compound is contained in an amount of 30 parts by mass or more, the color development and appearance will be favorable. When the monomer containing a (meth)acrylic acid compound is contained in an amount of 70 parts by mass or less, the impact resistance of the molded article will be favorable. The lower limit value of the amount of the monomer containing a (meth)acrylic acid compound used is more preferably 35 parts by mass or more, and still more preferably 40 parts by mass or more. The upper limit value of the amount of the monomer containing a (meth)acrylic acid compound used is more preferably 65 parts by mass or less, and still more preferably 60 parts by mass or less.

<Composite rubber (c)>

The composite rubber (c) is one of constituent components of the resin composition according to the third embodiment of the present invention.

The composite rubber (c) is a composite rubber containing polyorganosiloxane (a) and alkyl acrylate rubber (b), and more specifically, the composite rubber (c) is a polymer obtained by polymerizing a monomer mixture containing an acrylic acid ester monomer (hereinafter, abbreviated as "acrylic acid ester monomer mixture") to the polyorganosiloxane (a).

From the viewpoint of favorable impact resistance of the molded article, the polyorganosiloxane is preferably polydimethylsiloxane, and may contain a vinyl-polymerizable functional group-containing siloxane or a siloxane cross-linking agent having three or more siloxane bonds.

The proportion of the polyorganosiloxane can be 1 mass% or more and 20 mass% or less with respect to 100 mass% of the total mass of the polyorganosiloxane and the acrylic acid ester monomer mixture. When the proportion of the polyorganosiloxane is 1 mass% or more, the impact resistance of the molded article will be favorable. In addition, when the proportion of the polyorganosiloxane is 20 mass% or less, it is possible to maintain favorable color development and appearance of the molded article. The lower limit value of the proportion of the polyorganosiloxane is more preferably 2 mass% or more, and still more preferably 5 mass% or more. The upper limit value of the proportion of the polyorganosiloxane is more preferably 15 mass% or less.

As the above-described acrylic acid ester monomer, for example, methyl acrylate, ethyl acrylate, n-propyl acrylate, n-butyl acrylate, 2-ethylhexyl acrylate, and the like are exemplary examples, and from the viewpoint of improving the impact resistance of the molded article to be obtained, n-butyl acrylate is particularly preferable.

From the viewpoint of improving the impact resistance of the molded article, the above-described acrylic acid ester monomer mixture preferably contains 80 mass% or more of the acrylic acid ester monomer with respect to 100 mass% of the total mass of the acrylic acid ester monomer mixture. When the acrylic acid ester monomer is contained in an amount of 80 mass% or more, the color development and appearance of the molded article will be favorable. The lower limit value of the acrylic acid ester monomer is more preferably 85 mass% or more, and still more preferably 90 mass% or more. The above-described acrylic acid ester monomer mixture can contain 20 mass% or less of other vinyl monomers copolymerizable with the acrylic acid ester monomer, with respect to 100 mass% of the total mass of the monomer mixture. When the other vinyl monomers are contained in an amount of 20 mass% or less, the color development and appearance of the molded article will be favorable. The upper limit value of the other vinyl monomers is more preferably 15 mass% or less, and still more preferably 10 mass% or less.

The proportion of the acrylic acid ester monomer mixture with respect to 100 mass% of the total mass of the polyorganosiloxane and the acrylic acid ester monomer mixture can be 80 mass% or more and 99 mass% or less with respect to 100 mass% of the total mass of the composite rubber (c). When the proportion of the acrylic acid ester monomer mixture is 80 mass% or more, the color development and appearance of the molded article will be favorable. When the proportion of the acrylic acid ester monomer mixture is 99 mass% or less, it is possible to maintain favorable impact resistance of the molded article. The lower limit value of the proportion of the acrylic acid ester monomer mixture is more preferably 85 mass% or more. The upper limit value of the proportion of the acrylic acid ester monomer mixture is more preferably 98 mass% or less, and still more preferably 95 mass% or less.

A mass-average particle size of the composite rubber (c) is preferably 0.07 $\mu$m or more and 0.15 $\mu$m or less. When the mass-average particle size of the composite rubber (c) is 0.07 $\mu$m or more, the impact resistance of the molded article will be favorable. When the mass-average particle size of the composite rubber (c) is 0.15 $\mu$m or less, the color development and appearance of the molded article will be favorable. In addition, the lower limit value of the mass-average particle size of the composite rubber (c) is more preferably 0.09 $\mu$m or more, and the upper limit value thereof is more preferably 0.13 $\mu$m or less. A known method can be used to adjust the mass-average particle size.

As the monomer containing a (meth)acrylic acid compound, to be grafted to the composite rubber (c), methacrylic acid ester, acrylic acid ester, or the like is preferable. As the methacrylic acid ester, methyl methacrylate, ethyl methacrylate, 2-ethylhexyl methacrylate, and the like are exemplary examples. As the acrylic acid ester, methyl acrylate, ethyl acrylate, n-butyl acrylate, and the like are exemplary examples. Among these, from the viewpoint of excellent weather resistance, color development, appearance, and heat stability, a mixture of methacrylic acid ester and acrylic acid ester is preferable, and a mixture of methyl methacrylate and methyl acrylate or a mixture of methyl methacrylate and ethyl acrylate is particularly preferable.

The monomer containing a (meth)acrylic acid compound, to be grafted to the composite rubber (c), preferably contains 80 mass% or more of the (meth)acrylic acid compound with respect to 100 mass% of the total mass of the monomer. When the (meth)acrylic acid compound is contained in an amount of 80 mass% or more, the weather resistance, color development, appearance, and heat stability will be favorable. It is more preferable that the monomer containing a (meth)acrylic acid compound contains 80 mass% or more of methacrylic acid ester.

The monomer containing a (meth)acrylic acid compound, to be grafted to the composite rubber (c), can contain other vinyl monomers copolymerizable with the (meth)acrylic acid compound. As the other vinyl monomers copolymerizable with the (meth)acrylic acid compound, aromatic vinyl monomers such as styrene and $\alpha$-methylstyrene; cyanide vinyl monomers such as acrylonitrile and methacrylonitrile; cyclic vinyl monomers such as maleic anhydride and N-substituted maleimide; and the like are exemplary examples. The other vinyl monomers copolymerizable with the (meth)acrylic acid compound are contained in an amount of preferably 20 mass% or less with respect to 100 mass% of the total mass of the monomer. When the other vinyl monomers are contained in an amount of 20 mass% or less, the weather resistance, color development, appearance, and heat stability of the molded article to be obtained will be favorable.

The graft copolymer (A) can be produced by known polymerization methods. Among them, production by emulsion polymerization is particularly preferably because it facilitates control of particle size and control of core/shell structure.

The lower limit of the gel content of the graft copolymer (A) is not particularly limited, but from the viewpoint of excellent impact resistance of the molded article to be obtained, it is 40 mass% or more. The lower limit of the gel content thereof is preferably 50 mass% or more, and more preferably 55 mass% or more. On the other hand, from the viewpoint of excellent product processability of the molded article to be obtained, the upper limit of the gel content of the graft copolymer (A) is 99 mass% or less. The upper limit of the gel content thereof is preferably 95 mass% or less, and more preferably 90 mass% or less.

The above-described preferred upper limit and preferred lower limit can be combined arbitrarily. For example, the gel content of the graft copolymer (A) according to the third embodiment of the present invention is preferably 40 mass% or more and 99 mass% or less, more preferably 50 mass% or more and 95 mass% or less, and still more preferably 55 mass% or more and 90 mass% or less.

Here, the gel content of the graft copolymer (A) can be obtained by calculating from the following expression.

$$G' = (m'/M') \times 100$$

In the expression, G' (%) represent the gel content of the graft copolymer (A), M' represents a mass (also referred to as a mass before extraction) of a predetermined amount of the graft copolymer (A), and m' represents a mass (also referred to as a mass after extraction) of acetone-insoluble part of the predetermined amount of the graft copolymer (A).

Since the gel content of the resin composition is 35 mass% or less, when the gel content of the graft copolymer (A) is 80 mass% or more, by further containing the thermoplastic resin (B), the gel content of the resin composition can be adjusted. The content ratio of the graft copolymer (A) and the thermoplastic resin (B) in the resin composition may be appropriately set so that the gel content of the resin composition is a desired value.

<Thermoplastic resin (B)>

The thermoplastic resin (B) is one of constituent components of the resin composition according to the third embodiment of the present invention.

As the thermoplastic resin (B), olefin resins such as polypropylene and polyethylene; styrene resins such as polystyrene, a (meth)acrylate/styrene copolymer, a styrene/acrylonitrile copolymer, and a styrene/maleic anhydride copolymer; acrylic resins such as polymethyl methacrylate; polycarbonate resins; polyamide resins; polyester resins such as polyethylene terephthalate, polybutylene terephthalate, and polylactic acid; engineering plastics such as a (modified) polyphenylene ether resin, a polyoxymethylene resin, a polysulfone resin, a polyarylate resin, and a polyphenylene resin; vinyl chloride resins such as a hard vinyl chloride resin, a semi-hard vinyl chloride resin, a soft vinyl chloride resin; and the like are exemplary examples. These thermoplastic resins (B) can be used alone or in combination of two or more.

Among these, from the viewpoint of excellent weather resistance, color development, appearance, and the like of the molded article to be obtained, an acrylic resin is preferable.

As the acrylic resin, specifically, a (meth)acrylic acid ester polymer having a repeating unit derived from a (meth)acrylic acid ester monomer is preferable.

When the thermoplastic resin (B) contains the (meth)acrylic acid ester polymer, the weather resistance, color development, and appearance of the molded article to be obtained will be favorable.

As the (meth)acrylic acid ester polymer, specifically, a polymer having 80 mass% or more of the repeating unit derived from a (meth)acrylic acid ester monomer with respect to 100 mass% of the total mass of the (meth)acrylic acid ester polymer is preferable.

As the (meth)acrylic acid ester polymer, specifically, a copolymer having a repeating unit derived from methacrylic acid ester and a repeating unit derived from acrylic acid ester is more preferable.

The methacrylic acid ester and the acrylic acid ester can be the same as those used in the graft copolymer (A), and among them, a copolymer of methyl methacrylate and methyl acrylate is particularly preferable.

As necessary, the above-described (meth)acrylic acid ester polymer can contain a component other than the methacrylic acid ester and the acrylic acid ester.

As other components, aromatic vinyl monomers such as styrene and α-methylstyrene; cyanide vinyl monomers such as acrylonitrile and methacrylonitrile; cyclic vinyl monomers such as maleic anhydride and N-substituted maleimide; and the like are exemplary examples.

By using these other components, desired performances such as moldability, appearance, color development, impact strength, and heat resistance of the molded article to be obtained can be improved.

The thermoplastic resin (B) preferably contains 80 mass% or more of the (meth)acrylic acid ester monomer component. When the (meth)acrylic acid ester monomer component are contained in an amount of 80 mass% or more, the weather resistance, color development, appearance, and the like of the molded article to be obtained will be favorable. The content proportion of the (meth)acrylic acid ester monomer component is more preferably 90 mass% or more, and still more preferably 95 mass% or more.

<Fatty acid compound (C)>

The fatty acid compound (C) is one of constituent components of the resin composition according to the third embodiment of the present invention.

The resin composition according to the third embodiment of the present invention is characterized in that the fatty acid compound (C) is used in combination with the graft copolymer (A) containing a silicone component.

In the related art, the fatty acid compound (C) has been known to improve scratch resistance of resin molded articles, but its effect of improving impact resistance of the resin molded articles has not been known. However, in the present invention, when the fatty acid compound (C) is used in combination with the graft copolymer (A) containing a silicone component, as compared with a case of using in combination with a graft copolymer not containing the silicone component, it has been found that the impact resistance of the molded article to be obtained is more excellent. Furthermore, it has been found that the product processability or scratch resistance of the molded article to be obtained is more excellent.

As the fatty acid compound (C), from the viewpoint of easily making the molded article to be obtained excellent in scratch resistance, a chain-like hydrocarbon compound having at least one carbonyl group or carboxyl group in the molecule is preferable.

The chain-like hydrocarbon compound having at least one carbonyl group or carboxyl group in the molecule means a compound in which a carbon atom to which a carbonyl group or a carboxyl group is a constituent atom of the carbon chain. The carbon chain in the chain-like hydrocarbon compound having at least one carbonyl group or carboxyl group in the molecule may be saturated or unsaturated, and may be linear or branched.

With regard to such a fatty acid compound (C), as the chain-like hydrocarbon compound having a carboxyl group in the molecule, fatty acids and derivatives thereof are exemplary examples. As the chain-like hydrocarbon compound having an amide group in the molecule, fatty acid amides and derivatives thereof are exemplary examples. As the chain-like hydrocarbon compound having an ester group or a carbonyl group in the molecule, fatty acid alkyl esters and derivatives thereof or fatty acid glycerides and derivatives thereof are exemplary examples.

The derivative of fatty acid, the derivative of fatty acid amide, the derivative of fatty acid alkyl ester, and the derivative of fatty acid glyceride are compounds having a structure in which some or all of hydrogen atoms in the chain-like hydrocarbon compound or in the side chain are replaced with other organic groups. As the organic group, for example, a polyether group, a polyalkyl group, an aralkyl group, and a polyester group are exemplary examples, and these may be used alone or in combination of two or more.

Furthermore, as the derivative of fatty acid amide, it is possible to appropriately select and use from various compounds such as monoamides and bisamides according to various situations.

These fatty acid compounds (C) can be used alone or in combination of two or more thereof.

The lower limit of a melting point of the fatty acid compound (C) is not particularly limit, but from the viewpoint of improving the scratch resistance of the molded article to be obtained, the lower limit thereof is preferably 90°C or higher. The reason for this is not clear, but when the melting point is 90°C or higher, the fatty acid compound (C) contained in the methacrylic resin composition volatilizes in a metal mold during injection molding and adheres to a surface of the metal mold, and is easily liquefied and condensed, resulting in suppression of reduction in the amount of the fatty acid compound (C) discharged from a gas vent as gas. As a result, it is presumed that there is a tendency for the fatty acid compound (C) to exist at a high content proportion on the surface and in the vicinity of the surface of the molded article to be obtained. The melting point of the fatty acid compound (C) is more preferably 95°C or higher, and still more preferably 100°C or higher. On the other hand, the upper limit of a melting point of the fatty acid compound (C) is not particularly limit, but from the viewpoint of improving the scratch resistance of the molded article to be obtained, the upper limit thereof is preferably 150°C or lower. The reason for this is not clear, but when the melting point of the fatty acid compound (C) is 150°C or lower, it is presumed that the fatty acid compound (C) contained in the above-described methacrylic resin composition sufficiently volatilizes in the metal mold during injection molding, which makes it easier to obtain the above-described functions and effects. The melting point of the fatty acid compound (C) is more preferably 130°C or lower, and still more preferably 120°C or lower.

The upper and lower limits of the melting point of the fatty acid compound (C) can be combined arbitrarily. For example, the melting point of the fatty acid compound (C) is preferably 90°C or higher and 150°C or lower, more preferably 95°C or higher and 130°C or lower, and still more preferably 100°C or higher and 120°C or lower.

The upper limit of a 10% weight loss temperature of the fatty acid compound (C) is not particularly limit, but from the viewpoint of improving the scratch resistance of the molded article to be obtained, the upper limit thereof is preferably 350°C or lower. The reason for this is not clear, but after the fatty acid compound (C) contained in the methacrylic resin composition volatilizes in the metal mold during injection molding, as the 10% weight loss temperature is lower, the fatty acid contained in the methacrylic resin composition tends to volatilize in the metal mold during the injection molding. As a result, it is presumed that, in the methacrylic resin composition injected into the metal mold later, the liquefied or condensed fatty acid compound (C) adhering to the mold surface diffuses and migrates to the methacrylic resin composition, resulting in a high content proportion of the fatty acid compound (C) on the surface and in the vicinity of the surface of the molded article to be finally obtained. The 10% weight loss temperature of the fatty acid compound (C) is more preferably 300°C or lower, and still more preferably 260°C or lower.

On the other hand, the lower limit of the 10% weight loss temperature of the fatty acid compound (C) is not particularly limit, but from the viewpoint of improving the scratch resistance of the molded article to be obtained, the lower limit thereof is preferably 190°C or higher. The reason for this is not clear, but when the 10% weight loss temperature is 190°C or higher, it is presumed that the effects of the fatty acid compound (C) can be fully exhibited without thermal decomposition of the fatty acid compound (C) during the injection molding. The 10% weight loss temperature of the fatty acid compound (C) is more preferably 200°C or higher, and still more preferably 210°C or higher.

The upper and lower limits of the 10% weight loss temperature of the fatty acid compound (C) can be combined arbitrarily. For example, the 10% weight loss temperature of the fatty acid compound (C) is preferably 190°C or higher and 350°C or lower, more preferably 200°C or higher and 300°C or lower, and still more preferably 210°C or higher and 260°C or lower.

Among these fatty acid compounds (C), a fatty acid amide compound and a derivative thereof (hereinafter, collectively referred to as "fatty acid amide compound (C1)") are preferable.

As the fatty acid amide compound (C1), it is possible to use a compound represented by General Formula (i) (hereinafter, also referred to as "compound (i)"). The compound (i) is preferable from the viewpoint that excoriation resistance of the molded article to be obtained is excellent even when the blending amount is small, and the original performance of the thermoplastic resin is unlikely to be impaired.

$$R\text{-}CONH_2 \qquad (i)$$

(in General Formula (i), R is a hydrocarbon group having 10 to 25 carbon atoms, which may have a substituent)

From the viewpoint of excellent compatibility with the (meth)acrylic polymer (B 1) and excellent scratch resistance of the molded article to be obtained, the lower limit of the number of carbon atoms in R of Formula (i) of the fatty acid amide compound (C1) is preferably 10 or more, more preferably 15 or more, and still more preferably 17 or more. From the viewpoint of improving dispersibility of the fatty acid compound (C) in the methacrylic resin composition and maintaining favorable scratch resistance of the molded article to be obtained, the upper limit of the number of carbon atoms in R of Formula (i) of the fatty acid amide compound (C1) is preferably 25 or less, more preferably 24 or less, and still more preferably 23 or less.

The above-described preferred upper limit and preferred lower limit can be combined arbitrarily. For example, the number of carbon atoms in R of Formula (i) of the fatty acid amide compound is preferably 10 to 25, more preferably 15 to 24, and still more preferably 17 to 23.

Among the above-described fatty acid compounds (C), the fatty acid amide compound (C1) is preferred because it is excellent in compatibility with the (meth)acrylic polymer (B1), fluidity of the methacrylic resin composition, and scratch resistance of the molded article to be obtained.

As the fatty acid amide compound (C1), for example, a saturated fatty acid amide compound, an unsaturated fatty acid amide compound, a bis-fatty acid amide compound, and a methylol fatty acid amide compound are exemplary examples. These fatty acid amide compounds can be used alone or in combination of two or more thereof.

As the saturated fatty acid amide compound, for example, lauric acid amide, palmitic acid amide, stearic acid amide, behenic acid amide, hydroxystearic acid amide, and methylol stearic acid amide are exemplary examples. These saturated fatty acid amide compounds can be used alone or in combination of two or more thereof.

As the unsaturated fatty acid amide compound, for example, erucic acid amide, oleic acid amide, brassic acid amide, and elaidic acid amide are exemplary examples. These unsaturated fatty acid amide compounds can be used alone or in combination of two or more thereof.

Among these unsaturated fatty acid amide compounds, from the viewpoint that the scratch resistance of the molded article to be obtained is excellent, erucic acid amide or oleic acid amide is preferable, and erucic acid amide is more preferable.

As the bis-fatty acid amide compound, for example, bis-fatty acid amides such as methylenebisstearic acid amide, methylenebisoleic acid amide, ethylenebisstearic acid amide, and ethylenebisoleic acid amide; stearyl stearic acid amide, stearyl erucic acid amide, and oleyl palmitic acid amide are exemplary examples. These bis-fatty acid amide compounds can be used alone or in combination of two or more thereof.

Among the above-described fatty acid amide compounds (C1), a saturated fatty acid amide compound is preferred because the scratch resistance of the molded article to be obtained is more excellent.

From the viewpoint that the scratch resistance of the molded article to be obtained is more excellent, it is more preferable that the saturated fatty acid amide compound contains any of stearic acid amide or palmitic acid amide, and it is still more preferable that the saturated fatty acid amide compound contains stearic acid amide and palmitic acid amide as a main component. Here, "containing as a main component" means that the total mass of stearic acid amide and palmitic acid amide is 85.0 mass% or more with respect to 100 mass% of the total mass of the fatty acid amide compound.

<Other additives>

The resin composition according to the third embodiment of the present invention may contain an additive other than the graft copolymer (A) and the fatty acid compound (C). As other additives, for example, a pigment, a stabilizer, a reinforcing agent, a filler, a flame retardant, a foaming agent, a lubricant, a plasticizer, an antistatic agent, and the like are exemplary examples. These other additives can be used alone or in combination of two or more thereof.

<Method for producing resin composition>

The resin composition according to the third embodiment of the present invention can be obtained by, for example, a method in which the graft copolymer (A), the thermoplastic resin (B), and the fatty acid compound (C) are mixed in predetermined amounts, the mixture is melt-kneaded using a known melt-kneading means, and the obtained melt-kneaded product is formed into, for example, a pellet form using a known cutting/pulverizing device such as a pelletizer. As the known melt-kneading means, a kneader such as a single-screw extruder, a twin-screw extruder, a Banbury mixer, a pressure kneader, and a roll can be used. Alternatively, the above-described mixture can be used directly as a raw material for producing the molded article.

<Molded article>

The molded article according to the third embodiment of the present invention is obtained by molding the resin composition according to the third embodiment of the present invention.

As a method for obtaining the molded article, for example, known molding methods such as an injection molding method, an extrusion molding method, a pressure molding method, a blow molding method, a compression molding method, a calendar molding method, and an inflation molding method are exemplary examples. In addition, the obtained molded article may be further subjected to secondary molding using a known molding method such as a pressure molding method and a vacuum molding method. Molding conditions such as molding temperature and molding pressure may be appropriately set.

From the viewpoint of excellent scratch resistance, impact resistance, and product processability, the resin composition and molded article according to the third embodiment of the present invention can be preferably used for various molded articles such as exterior and interior material parts for vehicles, building material parts such as wall materials and window frames, tableware, toys, home appliance parts, and interior members.

[Examples]

The present invention will be specifically described below with reference to Examples and Comparative Examples. However, the present invention is not limited to these examples.

In addition, "parts" and "%" in the examples mean "parts by mass" and "mass%" unless otherwise specified.

Various measurements and evaluations in Examples and Comparative Examples were carried out by the following methods.

[Measurement and evaluation method]

(1) Production of test piece for evaluation

<Production of molded article X1A>

After drying resin compositions obtained in Examples and Comparative Examples with hot air at 80°C for approximately 4 hours, using an injection molding machine (model name: EC75SXIII-2A, manufactured by TOSHIBA MACHINE CO., LTD.), injection molding was performed at a molding temperature of 210°C and a metal mold temperature of 40°C to obtain a test piece of a molded article X1A, having a length of 80 mm, a width of 10 mm, and a thickness of 4 mm.

<Production of molded article X2A>

After drying resin compositions obtained in Examples and Comparative Examples with hot air at 80°C for approximately 4 hours, using an injection molding machine (model name: EC20PN-II, manufactured by TOSHIBA MACHINE CO., LTD.), injection molding was performed at a molding temperature of 210°C and a metal mold temperature of 40°C to obtain a test piece of a molded article X2A, having a length of 50 mm, a width of 50 mm, and a thickness of 3 mm.

(2) Evaluation of heat resistance

With the molded article X1A, using an HDT/VICAT tester (model name "No. 148-HD-PC3 HEAT DISTORION TESTER", manufactured by YASUDA SEIKI SEISAKUSHO, LTD.), a deflection temperature under load (HDT) (°C) was measured at a condition of a load of 0.45 MPa in accordance with ISO 75-1.2.
The test piece had been annealed at a temperature of 50°C for 16 hours before the measurement.
When the HDT was 65°C or higher was defined as "A", when the HDT was 61.5°C or higher and lower than 65°C was defined as "B", and when the HDT was 9.2°C or higher and lower than 61.5°C was defined as "C". As the HDT is higher, the heat resistance is excellent.

(3) Evaluation of impact resistance

With the molded article X1A, using a digital impact tester (model name: DG-UB, manufactured by Toyo Seiki Seisaku-sho, Ltd.), a notched Charpy impact strength ($kJ/m^2$) was measured at a temperature condition of 23°C in accordance with ISO 179-1.
When the Charpy impact strength was 20 or more was defined as "A", when the Charpy impact strength was 10.5 or more and less than 20 was defined as "B", when the Charpy impact strength was 9.2 or more and less than 19.5 was defined as "C", and when the Charpy impact strength was less than 9.2 was defined as "D". As the Charpy impact strength is higher, the impact resistance is excellent.

(4) Evaluation of transparency

With the molded article X2A, using a haze meter (model name: NDH4000, manufactured by NIPPON DENSHOKU INDUSTRIES Co., Ltd.), a total light transmittance (%) was measured in accordance with ISO 13468 and a haze value (%) was measured in accordance with ISO 14782.
When the total light transmittance was 70 or more was defined as "A", when the total light transmittance was 63.5 or more and less than 70 was defined as "B", when the total light transmittance was 61 or more and less than 63.5 was defined as "C", and when the Charpy impact strength was less than 61 was defined as "D". As the total light transmittance is higher, the transparency is excellent.
When the haze value was 40 or less was defined as "A", when the haze value was more than 40 and 55 or less was defined as "B", and when the haze value was more than 55 was defined as "C". As the haze value is smaller, the transparency is excellent.

(5) Evaluation of flexural mechanical properties

With the molded article X1A, using a tensile tester (model name: STROGRAPH T-F, manufactured by Toyo Seiki Seisaku-sho, Ltd.), a three-point bending test was performed in accordance with ISO 178, and a flexural modulus (MPa) and a flexural stress (MPa) were measured.
The test piece had been annealed at a temperature of 50°C for 16 hours before the measurement.
When the flexural stress (MPa) was 58 or less was defined as "A", when the flexural stress was more than 58 and 65 or less was defined as "B", and when the flexural stress was more than 65 was defined as "C".

When the flexural modulus (MPa) was 1.85 or less was defined as "A", when the flexural modulus was more than 1.85 and 2.21 or less was defined as "B", and when the flexural modulus was more than 2.21 was defined as "C".

(6) Measurement of refractive index and total refractive index Rab of polylactic acid polymer (D) and (meth)acrylic polymer (B1)

Using a molded product of a resin composition produced only from the polylactic acid polymer (D) and the acrylic resin (B 1), a thin film having a thickness of approximately 1 mm was produced by a hot pressing method (190°C, pressurized for 5 minutes after preheating for 3 minutes, and then cooling for 2 minutes). The obtained thin film was measured with an Abbe refractometer in accordance with ASTM-D542. A zinc chloride saturated aqueous solution was used as a contact liquid. · Measurement of refractive index Rc of graft copolymer (A): a thin film having a thickness of approximately 1 mm was produced from a powder of the graft copolymer (A) by a hot pressing method (150°C, pressurized for 1 minute after preheating for 5 minutes, and then cooling for 2 minutes). Using the thin film, a refractive index was measured with an Abbe refractometer in accordance with ASTM-D542. A zinc chloride saturated aqueous solution was used as a contact liquid.

(Material)

Polylactic acid polymer (D-1): Ingeo 2500HP (product name, manufactured by NatureWorks)
Acrylic resin (B-1): ACRYPET VH 001 (trade name, manufactured by Mitsubishi Chemical Corporation, acrylic resin containing 95 mass% or more of a repeating unit derived from methyl methacrylate)
Graft copolymer (A-1): Metablen W600A (trade name, manufactured by Mitsubishi Chemical Corporation, acrylic rubber graft copolymer obtained by graft-polymerizing a vinyl monomer to an acrylic rubber)
Graft copolymer (A-2): Metablen S2260 (trade name, manufactured by Mitsubishi Chemical Corporation, polyorganosiloxane/acrylic rubber graft copolymer obtained by graft-polymerizing a vinyl monomer to a polyorganosiloxane/acrylic rubber)
Graft copolymer (A-3): Metablen C-950 (trade name, manufactured by Mitsubishi Chemical Corporation, diene rubber graft copolymer obtained by graft-polymerizing a vinyl monomer to a diene rubber)
Fatty acid compound (C-1): mixture of fatty acid amide containing stearic acid amide and palmitic acid amide as a main component (trade name: FATTY ACID AMIDE S, manufactured by Kao Corporation)

[Example 1A]

After hand blending each material in the proportion shown in Table 1A, using a twin-screw extruder (model name "PCM30", LID = 25, manufactured by IKEGAI), the mixture was kneaded at a barrel temperature of 210°C and a die temperature of 210°C, and a screw rotation speed of 250 rpm to obtain a pellet-like thermoplastic resin composition. Evaluation results of the obtained thermoplastic resin composition are shown in Table 1A.

[Examples 2A to 14A and Comparative Examples 1A to 3A]

Pellet-like thermoplastic resin compositions were obtained by performing the same operation as in Example 1A, except that the types or proportions of each material were changed to those shown in Table 1A. Evaluation results of the obtained thermoplastic resin compositions are shown in Table 1A.

[Table 1A]

| | | | Example 1 | Example 2 | Example 3 | Example 4 | Example 5 | Example 6 | Comparative Example 1 | Comparative Example 2 | Example 7 | Example 8 | Example 9 | Comparative Example 3 | Example 10 | Example 11 | Example 12 | Example 13 | Example 14 |
|---|---|---|---|---|---|---|---|---|---|---|---|---|---|---|---|---|---|---|---|
| Polylactic acid polymer (D) | D-1 | Part by mass | 50 | 35 | 30 | 20 | 10 | 5 | 0 | 30 | 30 | 30 | 30 | 30 | 50 | 30 | 30 | 30 | 35 |
| Acrylic polymer (B) | B-1 | Part by mass | 50 | 65 | 70 | 80 | 90 | 95 | 100 | 70 | 70 | 70 | 70 | 70 | 50 | 70 | 70 | 70 | 65 |
| Graft copolymer (A) | A-1 | Part by mass | | | | | | | | 35 | 50 | 90 | 110 | | | | | | |
| | A-2 | Part by mass | 74 | 74 | 74 | 74 | 74 | 74 | 74 | | | | | | | | | | 74 |
| | A-3 | Part by mass | | | | | | | | | | | | 35 | 50 | 65 | 90 | 110 | |
| Fatty acid compound (C) | C-1 | Part by mass | | | | | | | | | | | | | | | | | 3.5 |
| Content proportion of (D) and (B) | | mass% | 57.5 | 57.5 | 57.5 | 57.5 | 57.5 | 57.5 | 57.5 | 74.1 | 66.7 | 52.6 | 47.6 | 74.1 | 66.7 | 60.6 | 52.6 | 47.6 | 57.5 |
| Content proportion of (A) | | mass% | 42.5 | 42.5 | 42.5 | 42.5 | 42.5 | 42.5 | 42.5 | 25.9 | 33.3 | 47.4 | 52.4 | 25.9 | 33.3 | 39.4 | 47.4 | 52.4 | 42.5 |
| Formulation ratio of polylactic acid polymer (D) and acrylic polymer (B) (mass ratio) | | - | 50/50 | 35/65 | 30/70 | 20/80 | 10/90 | 5/95 | 0/100 | 30/70 | 30/70 | 30/70 | 30/70 | 30/70 | 50/50 | 30/70 | 30/70 | 30/70 | 35/65 |
| Refractive index | Rab | - | 1.471 | 1.477 | 1.479 | 1.483 | 1.488 | 1.490 | 1.492 | 1.479 | 1.479 | 1.479 | 1.479 | 1.479 | 1.471 | 1.479 | 1.479 | 1.479 | 1.477 |
| | Rc | - | 1.468 | 1.468 | 1.468 | 1.468 | 1.468 | 1.468 | 1.468 | 1.469 | 1.469 | 1.469 | 1.469 | 1.489 | 1.489 | 1.489 | 1.489 | 1.489 | 1.468 |
| | Rc - Rab | - | -0.003 | -0.009 | -0.011 | -0.015 | -0.020 | -0.022 | -0.024 | -0.010 | -0.010 | -0.010 | -0.010 | 0.010 | 0.019 | 0.010 | 0.010 | 0.010 | -0.009 |
| Charpy impact strength | kJ/m² | | 25.8 | 18.6 | 16.4 | 12.5 | 10.8 | 9.9 | 9.0 | 7.8 | 9.2 | 10.3 | 9.8 | 10.2 | 21.6 | 15.2 | 16.2 | 15.3 | 18.7 |
| | Decision | | A | B | B | B | B | C | D | D | C | C | C | C | A | B | B | B | B |
| Deflection temperature under load | °C | | 62.0 | 66.5 | 67.2 | 72.2 | 77.5 | 80.9 | 83.7 | 69.4 | 69.5 | 66.4 | 63.0 | 72.1 | 63.1 | 71.5 | 70.2 | 69.3 | 65.0 |
| | Decision | | B | A | A | A | A | A | A | A | A | A | B | A | B | A | A | A | A |
| Flexural stress | MPa | | 52.8 | 54.7 | 54.9 | 55.6 | 55.8 | 55.3 | 55.2 | 71.5 | 58.8 | 37.2 | 31.3 | 77.3 | 57.1 | 57.8 | 47.5 | 40.3 | 60.0 |
| | Decision | | A | A | A | A | A | A | A | C | B | A | A | C | A | A | A | A | B |
| Flexural modulus | MPa | | 1.78 | 1.79 | 1.74 | 1.78 | 1.79 | 1.76 | 1.73 | 2.16 | 1.80 | 1.21 | 1.04 | 2.28 | 1.92 | 1.72 | 1.45 | 1.25 | 1.80 |
| | Decision | | A | A | A | A | A | A | A | B | A | A | A | C | B | A | A | A | A |
| Total light transmittance | % | | 76.8 | 73.2 | 71.5 | 67.9 | 64.2 | 62.8 | 60.8 | 63.4 | 62.7 | 65.1 | 66.7 | 75.4 | 61.6 | 74.9 | 75.6 | 77.0 | 73.0 |
| | Decision | | A | A | A | B | B | C | D | C | C | B | B | A | C | A | A | A | A |
| Haze value | % | | 17.5 | 23.0 | 26.2 | 35.2 | 46.1 | 50.8 | 55.8 | 56.8 | 49.9 | 48.1 | 43.7 | 28.9 | 27.0 | 25.0 | 21.6 | 18.5 | 27.0 |
| | Decision | | A | A | A | A | B | B | C | C | B | B | B | A | A | A | A | A | A |

From the results of the present examples and comparative examples, it was found that the molded article to be obtained with the resin composition according to the second embodiment of the present invention had excellent transparency, impact resistance, heat resistance, and mechanical properties such as flexural modulus and flexural stress.

Since the thermoplastic resin composition of Comparative Example 1A did not contain the polylactic acid polymer (D), it was inferior in impact resistance and transparency.

Since the content of the graft copolymer (A) in the thermoplastic resin composition of Comparative Example 2A was small, it was inferior in impact resistance, flexural mechanical properties (flexural stress), and transparency (haze).

Since the content of the graft copolymer (A) in the thermoplastic resin composition of Comparative Example 3A was small, it was inferior in flexural mechanical properties (flexural stress and flexural modulus).

<Evaluation method>

Evaluations in Examples and Comparative Examples were carried out by the following methods.

(1) Production of test piece for evaluation

<Production of molded article X1B>

After drying resin compositions obtained in Examples and Comparative Examples at 80°C for approximately 12 hours, using an injection molding machine (model name: EC75SXIII-2A, manufactured by TOSHIBA MACHINE CO., LTD.), injection molding was performed at a molding temperature of 250°C and a metal mold temperature of 60°C to obtain a test piece (molded article X1B) having a length of 80 mm, a width of 10 mm, and a thickness of 4 mm.

<Production of molded article X2B>

After drying resin compositions obtained in Examples and Comparative Examples at 80°C for approximately 12 hours, using an injection molding machine (model name: EC75SXIII-2A, manufactured by TOSHIBA MACHINE CO., LTD.), injection molding was performed at a molding temperature of 210°C and a metal mold temperature of 40°C to obtain a test piece (molded article X2B) having a length of 100 mm, a width of 100 mm, and a thickness of 3 mm.

<Production of molded article X3B>

After drying resin compositions obtained in Examples and Comparative Examples at 80°C for approximately 12 hours, using an injection molding machine (model name: EC75SXIII-2A, manufactured by TOSHIBA MACHINE CO., LTD.), injection molding was performed at a molding temperature of 230°C and a metal mold temperature of 60°C to obtain a dumbbell-shaped test piece (molded article X3B) having a length of 150 mm, a width of 10 mm, and a thickness of 4 mm.

(2) Evaluation of impact resistance

As an indicator of the impact resistance, using a digital impact tester (model name: DG-UB, manufactured by Toyo Seiki Seisaku-sho, Ltd.), a notched Charpy impact strength ($kJ/m^2$) of the molded article X1B was measured at a temperature condition of 23°C in accordance with ISO 179-1.

When the Charpy impact strength was 8.0 or more was defined as "A", when the Charpy impact strength was 3.0 or more and less than 8.0 was defined as "B", and when the Charpy impact strength was less than 3.0 was defined as "C". As the Charpy impact strength is higher, the impact resistance is excellent.

(3) Evaluation of product processability

As an indicator of the product processability, with the molded article X3B, using a tensile tester (model name: STROGRAPH T-F, manufactured by Toyo Seiki Seisakusho, Ltd.), a tensile test was performed in accordance with JIS K 6723 at a tensile speed of 50 mm/min to measure the tensile elongation (%). As the tensile elongation is higher, the product processability of the resin composition is favorable.

The test piece had been annealed at a temperature of 50°C for 16 hours before the measurement.

When the tensile elongation (%) was 25% or more was defined as "AA", when the tensile elongation (%) was 20% or more and less than 25% was defined as "A", when the tensile elongation (%) was 15% or more and 20% or less was defined as "B", and when the tensile elongation (%) was less than 15% was defined as "B".

(4) Evaluation of scratch resistance

As an indicator of color development of the thermoplastic resin composition, a glossiness of the test piece before and after a scratch resistance test was measured by the following method, and the difference (difference in glossiness) was calculated.

The molded article X2B was placed on a flat table, and using a steel wool scratch tester (positioning actuator, model name: XY-FS0010-902, manufactured by NSK Ltd.) and using, as a friction element, a planar friction element (diameter of 24 mm) and five sheets of medical gauze (Chikyu Tombo, 100% cotton, manufactured by Yamato Factory Co., Ltd.), as shown in FIG. 1, a friction element was reciprocated 200 times over a distance of 50 mm under the condition of a load of 500 g on the surface of the molded article X2B so that a central part 3 of the molded article X2B passed from a gate position at the time of injection molding in a MD direction (flow direction at the time of molding), thereby forming a frictional wear treated part 2 on the surface of the molded article X2B.

Next, with regard to the test piece before and after the scratch resistance test, using a specular gloss meter (model name: MULTI GLOSS 268 Plus, manufactured by Konica Minolta, Inc.), a light beam was made incident on the central part 3 of the molded article X2B (in the test piece subjected to the scratch resistance test, central part of the surface on which the frictional wear treated part 2 was formed) in a direction parallel to the reciprocating direction of the friction element. Thereafter, a 60° glossiness was measured in accordance with JJIS Z 8741-1997 under a condition that the diameter of the incident light beam was 15 mm, and an amount of change in 60° glossiness (difference in glossiness) before and after the scratch resistance test was calculated from the following expression (1B).

Difference in glossiness = Glossiness of test piece after scratch resistance test - Glossiness of test piece before scratch resistance test                     expression (1b)

The scratch resistance was determined according to the following standard.

AA: difference in glossiness was -1.5 or more.
A: difference in glossiness was -3.0 or more and less than 1.5.
B: difference in glossiness was -4.0 or more and less than 3.0.
C: difference in glossiness was less than -4.0.

(5) Gel content of resin composition

Approximately 1.0 g of the resin composition obtained in Examples and Comparative Examples were weighed to the last three digits using an electronic balance, and the obtained value was defined as a mass before extraction M (unit: g). Next, an acetone solution prepared by dissolving the above-described resin composition in 100 mL of acetone was refluxed at 65°C for 4 hours. The extraction liquid of the acetone solution after the refluxing was centrifuged for 30 minutes at a temperature of 4°C and a rotation speed of 14,000 rpm using a high-speed cooling centrifuge (trade name: CR21G, manufactured by Hitachi Koki Holdings Co., Ltd.). The extraction liquid after the centrifugation treatment was removed by a decantation method to recover acetone-insoluble solid. The recovered solid was again subjected to the reflux treatment and the centrifugation treatment under the same conditions as described above, and the acetone-insoluble solid was recovered by the decantation method. The recovered solid was dried at a temperature of 50°C for 24 hours, and the mass of the finally obtained acetone-insoluble solid was weighed to the last the digits using an electronic balance, and the obtained value was defined as a mass after extraction m (unit: g). Next, a gel content G (%) of the resin composition was calculated by the following expression.

$$G = (m/M) \times 100$$

(6) Mass-average particle size

A mass-average particle size of the polymer latex was obtained by measuring an absorbance of a liquid obtained by diluting the latex concentration (solid content) to 0.5 g/L using deionized water at a wavelength of 700 nm with an ultraviolet-visible spectrophotometer (UV-mini 1240 manufactured by Shimadzu Corporation), and calculating a value by a conversion expression prepared in advance between the absorbance and the mass-average particle size. The conversion expression was calculated from the absorbance and a mass-average particle size measured by a transmission electron microscope.

(Material)

Graft copolymer (A-1): polyorganosiloxane/acrylic rubber graft copolymer obtained by graft-polymerizing a vinyl monomer to a polyorganosiloxane/acrylic rubber, which was produced in Production Example 1
Graft copolymer (A-2): Metablen C-950 (trade name, manufactured by Mitsubishi Chemical Corporation, core/shell type diene rubber graft copolymer obtained by graft-polymerizing a vinyl monomer to a diene rubber)
Thermoplastic resin (B-1): ACRYPET VH001 (trade name, manufactured by Mitsubishi Chemical Corporation, acrylic resin containing 95 mass% or more of a repeating unit derived from methyl methacrylate)
Thermoplastic resin (B-2): ACRYPET VH5 (trade name, manufactured by Mitsubishi Chemical Corporation, acrylic resin containing 95 mass% or more of a repeating unit derived from methyl methacrylate)
Fatty acid compound (C-1): fatty acid amide containing stearic acid amide as a main component (trade name: IncroMax (registered trademark) PS, manufactured by Croda; 10% weight loss temperature: 246°C, melting point: 109°C)
Fatty acid compound (C-2): ethylenebisoleic acid amide (trade name: SLIPAX O, manufactured by Mitsubishi Chemical Corporation; 10% weight loss temperature: 344°C, melting point: 119°C)
Fatty acid compound (C-3): fatty acid amide containing stearic acid amide as a main component (trade name: FATTY ACID AMIDE S, manufactured by Kao Corporation; 10% weight loss temperature: 243°C, melting point: 103°C)

[Production Example 1] (Production of polyorganosiloxane latex (L))

A mixture of 98 parts by mass of octamethylcyclotetrasiloxane, 2 parts by mass of γ-methacryloyloxypropyldimethoxymethylsilane, 0.67 parts by mass of sodium dodecylbenzenesulfonate, and 300 parts by mass of deionized water was stirred with a homomixer at 10,000 rotation/min for 2 minutes, and then passed through a homogenizer once at a pressure of 300 kg/cm$^2$ to obtain a premixed organosiloxane latex.

An aqueous solution of 10 parts by mass of dodecylbenzenesulfonic acid and 90 parts by mass of deionized water was added in a reaction vessel equipped with a reflux condenser, the liquid temperature in the reaction vessel was raised to 85°C while stirring, and the above-described premixed organosiloxane latex was added dropwise thereto over 4 hours. After the dropwise addition was completed, the mixture was maintained for an additional 1 hour, and then cooled until the liquid temperature in the reaction vessel reached around room temperature. Next, the reactant in the reaction vessel was neutralized with a caustic soda aqueous solution to obtain a latex. The obtained latex had a solid content concentration of 17.6 mass%, and the mass-average particle size of the polyorganosiloxane in the latex was 0.05 μm.

(Production of graft copolymer (A))

7 parts by mass (as a solid content) of the polyorganosiloxane latex (L), 0.2 parts by mass of sodium dodecylbenzenesulfonate, and 200 parts by mass of deionized water (including water in the polyorganosiloxane latex (L)) were added in a reaction vessel equipped with a reflux condenser, and a mixture of 53 parts by mass of n-butyl acrylate, 0.6 parts by mass of allyl methacrylate, 0.2 parts by mass of 1,3-butylene glycol methacrylate, and 0.4 parts by mass of cumene hydroperoxide was added thereto with stirring. After replacing the inside of the reaction vessel with nitrogen, the liquid temperature in the reaction vessel was raised to 50°C, and an aqueous solution of 0.001 parts by mass of ferrous sulfate, 0.003 parts by mass of disodium ethylenediaminetetraacetic acid, 0.3 parts by mass of sodium formaldehyde sulfoxylate, and 2 parts by mass of deionized water was added thereto to initiate polymerization. Due to heat generated during the polymerization, the liquid temperature in the reaction vessel was raised to 80°C, and this state was maintained for 1 hour. The mass-average particle size of the obtained polyorganosiloxane/acrylic acid ester composite rubber was 0.10 μm.

After the liquid temperature in the reaction vessel was adjusted to 70°C, a mixed liquid of 36 parts by mass of methyl methacrylate, 4 parts by mass of methyl acrylate, and 0.2 parts by mass of cumene hydroperoxide was added dropwise thereto over 3 hours to initiate polymerization.

After the dropwise addition of the above-described mixed liquid was completed, the mixture was maintained for an additional 1 hour. Thereafter, the liquid temperature in the reaction vessel was lowered to around room temperature, and a latex of the graft copolymer (A) was obtained by graft-polymerizing the methyl methacrylate and the methyl acrylate to a composite rubber containing polyorganosiloxane and n-butyl acrylate rubber. The mass-average particle size of the graft copolymer in the obtained latex was 0.13 μm.

100 parts of a calcium acetate aqueous solution (3 mass%) was added in a separately prepared reaction vessel equipped with a reflux condenser, and the liquid temperature in the reaction vessel was raised to 80°C with stirring. Next, 100 parts of the above-described latex of the graft copolymer was gradually added dropwise to calcium acetate and solidified to obtain a precipitate. Next, the obtained precipitate was separated, washed, dehydrated, and dried to obtain a graft copolymer (A-1).

[Example 1B]

The graft copolymer (A-1) produced in Production Example 1, the thermoplastic resin (B-1), and the fatty acid compound (C-1) were mixed in the proportion shown in Table 1B, and thoroughly mixed using a Henschel mixer. Next, the mixture was supplied to a twin-screw extruder (model name: PCM30, manufactured by IKEGAI, φ: 30 mm, L/D = 25), and kneaded under conditions of a barrel temperature of 230°C (setting) and a screw rotation speed of 250 rpm to obtain a pellet-like resin composition. Evaluation results of the obtained resin composition are shown in Table 1B. In Table 1B, the content proportion (unit: mass%) of the graft copolymer (A), the thermoplastic resin (B), and the fatty acid compound (C) in the resin composition is a calculated value based on the blending amount (unit: parts by mass) of each component.

[Examples 2B to 5B and Comparative Examples 1B to 6B]

Pellet-like resin compositions were obtained by performing the same operation, except that the formulation shown in Table 1B was used. Evaluation results of the obtained resin composition are shown in Table 1B.

[Table 1B]

| | | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Blending amount | Graft copolymer (A) | (A-1) | Part by mass | 33.3 | 33.3 | 33.3 | 33.3 | 37.0 | 33.3 | - | - | - | - | - |
| | | (A-2) | Part by mass | - | - | - | - | - | - | - | 28.0 | 28.0 | 28.0 | 28.0 |
| | Thermoplastic resin (B) | (B-1) | Part by mass | 66.7 | 66.7 | 66.7 | 66.7 | | 66.7 | 100.0 | 72.0 | 72.0 | 72.0 | 72.0 |
| | | (B-2) | Part by mass | | | | | 63.0 | | | | | | |
| | Fatty acid compound (C) | (C-1) | Part by mass | 2.0 | 5.0 | - | - | - | - | 2.0 | 2.0 | 5.0 | - | - |
| | | (C-2) | Part by mass | - | - | 2.0 | 5.0 | - | - | - | - | - | 2.0 | 5.0 |
| | | (C-3) | Part by mass | - | - | - | - | 2.0 | - | - | - | - | - | - |
| Resin composition | Graft copolymer (A) | mass% | | 32.6 | 31.7 | 32.6 | 31.7 | 36.2 | 33.3 | 0.0 | 27.5 | 26.6 | 27.5 | 26.6 |
| | Thermoplastic resin (B) | mass% | | 65.4 | 63.5 | 65.4 | 63.5 | 61.8 | 66.7 | 98.0 | 70.5 | 68.6 | 70.5 | 68.6 |
| | Fatty acid compound (C) | mass% | | 2.0 | 4.8 | 2.0 | 4.8 | 2.0 | 0.0 | 2.0 | 2.0 | 4.8 | 2.0 | 4.8 |
| | Gel content | % | | 20 | 20 | 20 | 20 | 22 | 20 | - | 20 | 20 | 20 | 20 |
| Molded article | Charpy impact strength | kJ/m² | | 8.3 | 8.8 | 8.4 | 8.4 | 8.5 | 8.3 | 1.3 | 7.2 | 7.4 | 7.7 | 7.8 |
| | | Decision | | A | AA | A | A | A | A | C | B | B | B | B |
| | Tensile elongation | % | | 21.1 | 21.2 | 30.5 | 20.8 | 21.0 | 17.7 | 4.0 | 14.0 | 12.2 | 26.1 | 24.5 |
| | | Decision | | A | A | AA | A | A | B | C | C | C | A | A |
| | Difference in glossiness | - | | -2.7 | -2.0 | -2.8 | -0.9 | -2.2 | -4.9 | -1.0 | -3.4 | -3.5 | -3.6 | -1.1 |
| | | Decision | | A | A | A | AA | A | C | AA | B | B | B | AA |

Molded articles obtained by molding the resin compositions obtained in Examples were excellent in impact resistance, product processability, and scratch resistance.

On the other hand, the molded article obtained by molding the resin composition obtained in Comparative Example 1B was inferior in molding processability and scratch resistance because the fatty acid compound (C) was not blended.

The molded article obtained by molding the resin composition obtained in Comparative Example 2B was inferior in impact resistance and molding processability because the graft copolymer (A) was not blended.

Molded articles molded from the resin compositions obtained in Comparative Examples 3B to 6B were inferior in impact resistance because the graft copolymer did not contain a silicone component. In particular, the molded articles of Comparative Examples 3B to 5B were inferior in scratch resistance. Furthermore, the molded articles of Comparative Examples 3B and 4B were also inferior in molding processability.

[Industrial Applicability]

The first embodiment of the present invention is to provide a resin composition having excellent mechanical properties and a molded article thereof.

According to the second embodiment of the present invention, it is possible to stably provide a resin composition that a molded article to be obtained has excellent transparency, impact resistance, heat resistance, and mechanical properties such as flexural modulus and flexural stress, and a molded article thereof. In particular, it is suitable for bending molding, blow molding, or vacuum molding of sheets and films.

Such molded articles are suitably used for applications requiring these physical properties, such as optical materials, lighting materials, housing equipment materials, building materials, and vehicle parts. Alternatively, the molded articles can also be suitably used for miscellaneous goods such as toys, stationery, OA equipment, home electric appliances, packages, vending machines, and faceplates of pachinko machines.

With the resin composition according to the third embodiment of the present invention, since the molded article to be obtained has excellent scratch resistance, impact resistance, and product processability, the molded article can be suitably used as materials for housing equipment, for example, bathroom vanities, bathtubs, flush toilets, and the like; building materials for outdoor application, for example, signboards, window frames, exterior wall materials, and the like; and vehicle parts, for example, interior and exterior materials for vehicles, and the like.

[Reference Signs List]

1: Test piece
2: Frictional wear treated part
3: Central part of test piece
4: Gate

The invention is illustrated by the following items 1-40:

[Item 1] A resin composition comprising:

a graft copolymer (A);
a thermoplastic resin (B) (excluding the graft copolymer (A) and a polylactic acid polymer (D)); and
a fatty acid compound (C).

[Item 2] The resin composition according to item 1,

wherein the graft copolymer (A) is obtained by graft-polymerizing a monomer to a rubber-like polymer,
the rubber-like polymer includes at least one selected from the group consisting of a composite rubber containing polyorganosiloxane rubber and acrylic rubber, a diene rubber, and an acrylic rubber, and
the monomer includes a vinyl monomer.

[Item 3] The resin composition according to item 1 or 2,
wherein the graft copolymer (A) contains a silicone component.
[Item 4] The resin composition according to any one of items 1 to 3, wherein the thermoplastic resin (B) contains a (meth)acrylic polymer (B 1).
[Item 5] The resin composition according to any one of items 1 to 4,
wherein the fatty acid compound (C) includes at least one selected from the group consisting of a saturated fatty acid amide compound, an unsaturated fatty acid amide compound, a bis-fatty acid amide compound, and a methylol fatty acid amide compound.
[Item 6] The resin composition according to item 5,
wherein the fatty acid compound (C) includes a fatty acid amide compound.
[Item 7] The resin composition according to item 6,
wherein the fatty acid amide compound includes at least one selected from the group consisting of lauric acid amide, palmitic acid amide, stearic acid amide, behenic acid amide, hydroxystearic acid amide, and methylol stearic acid amide.
[Item 8] The resin composition according to any one of items 1 to 7, further comprising:
the polylactic acid polymer (D).
[Item 9] The resin composition according to any one of items 1 to 8,
wherein a content of the graft copolymer (A) is 10 to 80 mass% with respect to a total mass of the resin composition.
[Item 10] The resin composition according to any one of items 1 to 9,
wherein a content of the thermoplastic resin (B) is 10 to 80 mass% with respect to a total mass of the resin composition.
[Item 11] The resin composition according to any one of items 1 to 10,
wherein a content of the fatty acid compound (C) is 1 to 20 mass% with respect to a total mass of the resin composition.
[Item 12] The resin composition according to any one of items 1 to 11, further comprising:

the polylactic acid polymer (D),
wherein a content of the polylactic acid polymer (D) is 1 to 50 mass% with respect to a total mass of the resin composition.

[Item 13] The resin composition according to any one of items 1 to 12,

wherein a gel content of the graft copolymer (A) is 40 mass% or more and 99 mass% or less.

[Item 14] A resin composition comprising:

a polylactic acid polymer (D);
a (meth)acrylic polymer (B1) containing a methyl methacrylate monomer unit; and
a graft copolymer (A) which is obtained by graft-polymerizing a vinyl monomer to a rubber-like polymer and is contained in an amount of more than 45 parts by mass and 110 parts by mass or less with respect to 100 parts by mass of a total of the polylactic acid polymer (D) and the (meth)acrylic polymer (B1),
wherein the graft copolymer (A) is obtained by graft-polymerizing a vinyl monomer (a2) to a rubber-like polymer (A1) which is at least one selected from a polyorganosiloxane/acrylic rubber, a diene rubber, and an acrylic rubber.

[Item 15] The resin composition according to item 14,
wherein the graft copolymer (A) is contained in an amount of 65 parts by mass or more and 95 parts by mass or less with respect to 100 parts by mass of the total of the polylactic acid polymer (D) and the (meth)acrylic polymer (B 1).

[Item 16] The resin composition according to item 14 or 15,
wherein the polyorganosiloxane/acrylic rubber is a composite rubber containing polyorganosiloxane and alkyl acrylate rubber.

[Item 17] The resin composition according to any one of items 14 to 16,
wherein a formulation ratio of the polylactic acid polymer (D) and the (meth)acrylic polymer (B 1) is 1/99 to 99/1 (mass ratio).

[Item 18] The resin composition according to any one of items 14 to 17,
wherein a formulation ratio of the polylactic acid polymer (D) and the (meth)acrylic polymer (B 1) is 5/95 to 50/50 (mass ratio).

[Item 19] The resin composition according to any one of items 14 to 18,
wherein, with respect to a total mass of the resin composition, the polylactic acid polymer (D) and the (meth)acrylic polymer (B 1) are contained in a total amount of 30 mass% or more and 70 mass% or less, and the graft copolymer (A) is contained in an amount of 30 mass% or more and 70 mass% or less.

[Item 20] The resin composition according to any one of items 14 to 19,
wherein the methyl methacrylate monomer unit is contained in the (meth)acrylic polymer (B 1) in an amount of 50 mass% or more.

[Item 21] The resin composition according to any one of items 14 to 20, further comprising:
a fatty acid compound (C).

[Item 22] The resin composition according to item 21,

wherein the fatty acid compound (C) contains a compound represented by General Formula (i) as a main component,

$$R\text{-}CONH_2 \qquad (i)$$
(in the formula, R is a hydrocarbon group having 10 to 25 carbon atoms, which may have a substituent).

[Item 23] The resin composition according to item 21,
wherein the fatty acid compound (C) contains, as a main component, at least one selected from stearic acid amide and palmitic acid amide.

[Item 24] The resin composition according to any one of items 21 to 23,
wherein the fatty acid compound (C) is contained in an amount of 0.01 parts by mass or more and 10 parts by mass or less with respect to 100 parts by mass of the total of the polylactic acid polymer (D) and the (meth)acrylic polymer (B 1).

[Item 25] The resin composition according to any one of items 14 to 24,
wherein a refractive index Rc of the graft copolymer (A) and a total refractive index Rab of the polylactic acid polymer (D) and the (meth)acrylic polymer (B 1) satisfy Expression (1A),

$$-0.03 \leq Rc - Rab \leq +0.03 \cdots \text{Expression (1A)}.$$

[Item 26] The resin composition according to any one of items 14 to 21,
wherein a content of a crosslinkable monomer is 0.3 to 10 mass% in a total 100 mass% of monomers constituting the rubber-like polymer (A1).

[Item 27] A resin composition comprising:

a graft copolymer (A) containing a silicone component;
a thermoplastic resin (B); and
a fatty acid compound (C).

[Item 28] The resin composition according to item 27,
wherein the graft copolymer (A) is a graft copolymer obtained by graft-polymerizing a monomer containing a (meth) acrylic acid compound to a composite rubber containing polyorganosiloxane and alkyl acrylate rubber.
[Item 29] The resin composition according to items 27 or 28,
wherein a melting point of the fatty acid compound (C) is 90°C or higher.
[Item 30] The resin composition according to any one of items 27 to 29,
wherein a 10% weight loss temperature of the fatty acid compound (C) is 350°C or lower.
[Item 31] The resin composition according to any one of items 27 to 30,
wherein the fatty acid compound (C) contains fatty acid amide as a main component.
[Item 32] The resin composition according to item 31,

wherein the fatty acid amide is represented by General Formula (i),

$$R\text{-}CONH_2 \qquad \text{(i)}$$

(in the formula, R is a hydrocarbon group having 10 to 25 carbon atoms, which may have a substituent).

[Item 33] The resin composition according to any one of items 27 to 32,
wherein the thermoplastic resin (B) contains a (meth)acrylic acid ester polymer having a repeating unit derived from a (meth)acrylic acid ester monomer.
[Item 34] The resin composition according to item 33,
wherein the (meth)acrylic acid ester polymer has the repeating unit derived from a (meth)acrylic acid ester monomer in an amount of 80 mass% or more with respect to 100 mass% of a total mass of the (meth)acrylic acid ester polymer.
[Item 35] The resin composition according to any one of items 27 to 34,
wherein the graft copolymer (A) is a graft copolymer obtained by graft-polymerizing 30 to 70 parts by mass of a monomer containing a (meth)acrylic acid compound to 30 to 70 parts by mass of a composite rubber which contains 1 to 20 mass% of polyorganosiloxane and 80 to 99 mass% of alkyl acrylate rubber.
[Item 36] The resin composition according to any one of items 27 to 35,
wherein a gel content of the resin composition is 1 mass% or more.
[Item 37] The resin composition according to item 36,
wherein the gel content of the resin composition is 35 mass% or less.
[Item 38] The resin composition according to any one of items 27 to 37,
wherein the resin composition contains the graft copolymer (A) in a content proportion of 1 mass% or more and 50 mass% or less and contains the thermoplastic resin (B) in a content proportion of 50 mass% or more and 99 mass% or less with respect to 100 mass% of a total mass of the resin composition.
[Item 39] The resin composition according to any one of items 27 to 38,
wherein the resin composition contains the fatty acid compound (C) in a content proportion of 0.01 mass% or more and 10 mass% or less with respect to 100 mass% of a total mass of the resin composition.
[Item 40] A molded article comprising:
the resin composition according to any one of items 1 to 39.

**Claims**

1. A resin composition comprising:

   a graft copolymer (A);
   a (meth)acrylic polymer (B 1) containing a methyl methacrylate monomer unit as a thermoplastic resin (B);
   a fatty acid compound (C); and
   a polylactic acid polymer (D),
   wherein a formulation ratio of the polylactic acid polymer (D) and the (meth)acrylic polymer (B 1) is 5/95 to 50/50 (mass ratio).

2. The resin composition according to Claim 1,

wherein the graft copolymer (A) is obtained by graft-polymerizing a monomer to a rubber-like polymer, the rubber-like polymer includes at least one selected from the group consisting of a composite rubber containing polyorganosiloxane rubber and acrylic rubber, a diene rubber, and an acrylic rubber, and the monomer includes a vinyl monomer.

3.  The resin composition according to Claim 1 or 2,
    wherein the graft copolymer (A) contains a silicone component.

4.  The resin composition according to any one of Claims 1 to 3,
    wherein the fatty acid compound (C) includes at least one selected from the group consisting of a saturated fatty acid amide compound, an unsaturated fatty acid amide compound, a bis-fatty acid amide compound, and a methylol fatty acid amide compound.

5.  The resin composition according to Claim 4,
    wherein the fatty acid compound (C) includes a fatty acid amide compound.

6.  The resin composition according to Claim 5,
    wherein the fatty acid amide compound includes at least one selected from the group consisting of lauric acid amide, palmitic acid amide, stearic acid amide, behenic acid amide, hydroxystearic acid amide, and methylol stearic acid amide.

7.  The resin composition according to any one of Claims 1 to 6,
    wherein a content of the graft copolymer (A) is 10 to 80 mass% with respect to a total mass of the resin composition.

8.  The resin composition according to any one of Claims 1 to 7,
    wherein a content of the thermoplastic resin (B) is 10 to 80 mass% with respect to a total mass of the resin composition.

9.  The resin composition according to any one of Claims 1 to 8,
    wherein a content of the fatty acid compound (C) is 1 to 20 mass% with respect to a total mass of the resin composition.

10. The resin composition according to any one of Claims 1 to 9,
    wherein a content of the polylactic acid polymer (D) is 1 to 50 mass% with respect to a total mass of the resin composition.

11. The resin composition according to any one of Claims 1 to 10,
    wherein a gel content of the graft copolymer (A) is 40 mass% or more and 99 mass% or less.

12. A molded article comprising:
    the resin composition according to any one of Claims 1 to 11.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020178003 A
- JP 2021005171 A
- JP 2021005172 A
- JP 2017197667 A
- WO 05123831 A
- WO 05085352 A
- JP H11100484 A
- JP 2000327880 A
- JP H725973 B
- JP H733861 A
- JP S5996123 A
- US 4057537 A
- EP 261572 A
- JP H6184417 A
- US 2891920 A
- US 3294725 A

### Non-patent literature cited in the description

- *Proceedings of the Symposium on Polymer Science*, vol. 44, 3198-3199
- *Polymer Bulletin*, 1985, vol. 14, 491-495
- *Makromol CheAG-187*, 1986, 1611-1628